# EUROPÄISCHE PATENTSCHRIFT

(11) **EP 0 898 684 B1**
(45) Veröffentlichungstag und Bekanntmachung des Hinweises auf die Patenterteilung: **29.10.2003**
(21) Anmeldenummer: 97925864.7
(22) Anmeldetag: 23.05.1997
(51) Int. Cl.: F21W 111/06, F21K 7/00, E01F 9/06, H05B 37/02

(54) **LEUCHTEINRICHTUNG FÜR DIE SIGNALABGABE AUF SOWIE DIE KENNZEICHNUNG UND MARKIERUNG VON VERKEHRSFLÄCHEN VON FLUGHÄFEN**
LIGHTING DEVICE FOR SIGNALLING ON AND IDENTIFICATION AND MARKING OF AIRPORT TRAFFIC AREAS
DISPOSITIF D'ECLAIRAGE POUR LA SIGNALISATION AINSI QUE L'IDENTIFICATION ET LE MARQUAGE DE SURFACES DE CIRCULATION D'AEROPORTS

(30) Priorität: 23.05.1996 DE 19620827
(43) Veröffentlichungstag der Anmeldung: 03.03.1999
(73) Patentinhaber: SIEMENS AKTIENGESELLSCHAFT, 80333 München (DE)
(72) Erfinder: VANDEREN, Michel, B-1150 Brüssel (BE); VANDEVOORDE, Jean-Claude, B-1820 Steenkokkerzeel (BE)
(86) Internationale Anmeldenummer: DE9701052
(87) Internationale Veröffentlichungsnummer: WO97044615

(56) Entgegenhaltungen:
- EP-A- 0 390 479
- EP-A- 0 400 176
- EP-A- 0 658 655
- WO-A-95/19525
- WO-A-96/02970
- FR-A- 2 697 617
- FR-A- 2 713 747
- GB-A- 2 243 636
- GB-A- 2 264 002
- US-A- 4 650 998

## Beschreibung

Die Erfindung bezieht sich auf ein Unterflurfeuer zur Signalabgabe und zur Kennzeichnung und Markierung von Verkehrsflächen, insbesondere von Flughäfen, z.B. Startbahnen, Landebahnen, Taxiways und dergleichen, mit als Halbleiterelementen ausgebildeten Lichtquellen zur direkten Abstrahlung von sichtbarem Licht und einer vor den Halbleiterelementen angeordneten Abdeckplatte zur Ausrichtung und Bündelung des von den Halbleiterelementen abgestrahlten Lichts.

Bisher haben Leuchteinrichtungen, die als Bestandteile von Flughafenbefeuerungsanlagen dienen, als Lichtquellen meist Wolframhalogen- oder Glühlampen. Derartige Lichtquellen haben üblicherweise eine Lebensdauer von ca. 1000 bis 1500 Stunden. Da für Flughafenbefeuerungsanlagen eingesetzte Leuchteinrichtungen Licht in unterschiedlichen Farben abstrahlen müssen, kommt es beim Betrieb bekannter, mit Wolframhalogen- und Glühlampen ausgerüsteter Leuchteinrichtungen zu einem vergleichsweise hohen Verbrauch an elektrischer Energie, da solche Lichtquellen in einem großen Lichtwellenbereich Licht abstrahlen, von dem lediglich ein geringer Anteil für die Erzeugung von Licht in einer bestimmten Farbe nutzbar ist.

Die FR 2697617 beschreibt eine Leuchteinrichtung zur Verwendung auf Schiffen bzw. Schiffseinheiten, die eine Matrix von LED's aufweist. Die EP 0 390 479 befaßt sich mit einer Diodenanordnung für Anzeigevorrichtungen wobei die Verwendung einer Pulsweitmodulation zur Anpassung an die Umgebungslichtstrahlung vorgeschlagen wird.

Der Erfindung liegt die Aufgabe zugrunde, eine Leuchteinrichtung der eingangs genannten Art zu schaffen, die einerseits eine längere Nutzungsdauer erlaubt und mittels der andererseits der Energieaufwand zum Betrieb der Flughafenbefeuerungsanlage erheblich reduziert werden kann.

Diese Aufgabe wird erfindungsgemäß durch ein Unterflurfeuer mit den Merkmalen des Anspruchs 1 gelöst, wobei die Leuchteinrichtung eine Steuereinrichtung mit einer Pulsweitmodulationsvorrichtung aufweist, mittels der die den Halbleiterelementen zugeführte elektrische Energie regelbar ist und wobei die Leuchteinrichtung als von Flugzeugen überrollbar ausgebildet ist. Mittels derartiger Halbleiterelementen kann die Lichtabstrahlung in einer vorgegebenen Farbe erfolgen, ohne daß irgendwelche optischen Strahlungs- filterungen erforderlich wären. Auch bei einer Regelung eines solchen Halbleiterelements bleibt der Wellen- längenbereich, innerhalb dessen das Halbleiterelement Licht abstrahlt, sehr eng und konstant. Entsprechend erzeugt ein solches Halbleiterelement außerhalb des sichtbaren Bereichs kaum Strahlung, insbesondere kaum wärmeerzeugende Infrarot- oder Ultraviolettstrahlung. Der Energieaufwand für den Betrieb eines derartigen Halbleiterelements bzw. einer Leuchteinrichtung mit derartigen Halbleiterelementen ist somit im Vergleich zu herkömmlichen Leuchteinrichtungen erheblich reduziert, was u.a. darauf zurückgeht, daß der Einsatz jedweder Farbfilter nicht erforderlich ist. Darüber hinaus sind derartige Halbleiterelemente innerhalb von Mikrosekunden regelbar, im Vergleich zu einem Bereich von Sekunden bei herkömmlichen Glüh- bzw. Wolframhalogenlampen; hierdurch ergeben sich erhebliche praktische Vorteile bei der Verkehrsregelung im Bereich von Flughäfen. Die Nutzungsdauer solcher Halbleiterelemente beträgt durchschnittlich ca. 70000 Stunden, verglichen mit 1000 bis 1500 Stunden für die bei den heute üblichen Leuchteinrichtungen zum Einsatz kommenden Glüh- und Wolframhalogenlampen. Mit derartig ausgestalteten Leuchteinrichtungen ist es erstmalig möglich, die Verfolgung der Fahrt eines Flugzeugs im Bereich einer Start-, Landebahn oder eines Taxiways zeitnah zu realisieren. Mit erfindungsgemäß ausgestalteten Leucht- einrichtungen lassen sich bei entsprechender Auswahl der für die Leuchteinrichtung zusammengefügten Halbleiterelemente die Standards gemäß ICAO, FAA, DOT, CIE, MIL-C-25050 ohne weiteres erfüllen. Ein weiterer Vorteil der erfindungs- gemäßen Leuchteinrichtung besteht darin, daß sie die für eine Signalerkennung erforderliche Leuchtdichte bereits in einer vergleichsweise weiten Entfernung zur Leuchtein- richtung schafft, wobei darüber hinaus das Risiko eines Blendeffekts für den Fall vermieden wird, daß ein Flugzeug- oder Fahrzeugführer sich in einem lediglich geringen Abstand zur Leuchteinrichtung befindet. Erfindungsgemäß ist die Leuchteinrichtung als Unterflurfeuer ausgebildet, wobei durch die Abwesenheit von Hohlräumen gesichert wird, daß die Leuchteinrichtung bzw. die sie ausbildenden Kassetten nicht mit Biegespannungen, sondern ausschließlich mit Druckspannungen beaufschlagt werden. Da bei einer derart als Unterflurfeuer ausgestalteten Leuchteinrichtung der Temperaturanstieg aufgrund des Betriebs der Lichtquellen weniger als 20% des Temperaturanstiegs bei herkömmlichen Leuchteinrichtungen beträgt, können die Beanspruchungen von das Unterflurfeuer überquerenden Flugzeugreifen erheblich reduziert werden. Darüber hinaus kann das Risiko von Verbrennungen beim Betriebspersonal im wesentlichen ausgeschlossen werden.

Die Halbleiterelemente der erfindungsgemäßen Leuchteinrichtung können vorteilhaft als lichtabstrahlende Dioden (LED) oder als lichtabstrahlende Polymere ausgebildet sein.

Es ist möglich, daß mehrere Halbleiterelemente der Leuchteinrichtung ein Cluster bilden, wobei zu einem Cluster 2 bis 200, vorzugsweise 2 bis 30, Halbleiterelemente gehören können. Hierdurch kann der Ausfall von Halbleiterelementen kompensiert werden, da ein mehrere Halbleiterelemente aufweisendes Cluster auch dann noch funktionsfähig bleibt, wenn ein oder mehrere Halbleiterelemente ausfallen.

Die erfindungsgemäße Leuchteinrichtung kann in einer vorteilhaften Ausführungsform als Clusteranordnung aus mehreren einzelnen Clustern, z. B. aus 1 bis 30, vorzugsweise 1 bis 16 Clustern, ausgebildet sein. Hierdurch kann die räumliche Lichtverteilung der Leuchteinrichtung entsprechend den bereits erwähnten Standard- oder anderen Anforderungen optimiert werden. Die globalen fotometrischen Eigenschaften der Leuchteinrichtung werden durch die Clusteranordnung bestimmt.

Bei einer vorteilhaften Ausführungsform der erfindungsgemäßen Leuchteinrichtung sind die Halbleiterelemente eines Clusters, die vorzugsweise fassungsfrei ausgebildet sind, auf einem gemeinsamen Substrat angeordnet.

Wenn das die Halbleiterelemente halternde Substrat auf seiner den Halbleiterelementen zugewandten Seite mit einer Schicht aus einem reflektierenden Werkstoff versehen ist, ist es gewährleistet, daß die Strahlungsanteile der Halbleiterelemente, die nicht in Richtung auf die Strahlenaustrittsfläche des Clusters bzw. der Leuchteinrichtung gerichtet sind, weitestgehend dorthin umgelenkt werden.

Gemäß einer Ausführungsform der erfindungsgemäßen Leuchteinrichtung, bei der ausgangsseitig der Halbleiterelemente eine Spiegeloberfläche angeordnet ist, mittels der die Abstrahlung der Halbleiterelemente abgelenkt wird, kann die Abstrahlrichtung der Leuchteinrichtung je nach Positionierung der Spiegeloberfläche praktisch beliebig vorgesehen werden.

Wenn die Strahlenaustrittfläche der Leuchteinrichtung in ihren Abmessungen etwa der Fläche des die Halbleiterelemente halternden Substrats entspricht, ergibt sich eine gleichmäßige und damit als angenehm empfundene Lichtabstrahlung der Leuchteinrichtung.

Wenn die erfindungsgemäße Leuchteinrichtung aus ggf. unterschiedlichen Clustern und/oder Clusteranordnungen modulartig zusammenstellbar ist, ist es möglich, eine derartige Leuchteinrichtung für praktisch jeden denkbaren Einsatz und jede denkbare Anforderungen ohne großen Aufwand zusammenzufügen.

So kann beispielsweise eine Leuchteinrichtung, die bidirektional ausgebildet ist und zwei Clusteranordnungen aufweist, von denen jede in eine zu der der anderen entgegengesetzte Richtung abstrahlt, zur Mittellinienanzeige eines geraden Taxiways und auch als Halteleuchte eingesetzt werden; sofern die Leuchteinrichtung zwei Clusteranordnungen aufweist, die in zueinander geneigten Richtungen Licht abstrahlen, kann sie auf gekrümmten Abschnitten von Taxiways zur Anzeige der Mittellinie derselben oder als Halteleuchte zum Einsatz kommen.

Wenn die Clusteranordnungen dieser Leuchteinrichtung mehrere, z.B. drei oder fünf, nebeneinander angeordnete Cluster aufweisen, wobei einander benachbarte Cluster jeweils einen Winkel kleiner 180 Grad einschließen, kann eine Optimierung der räumlichen Verteilung des von der Leuchteinrichtung abgestrahlten Lichts erreicht werden.

Sofern die Leuchteinrichtung omnidirektional ausgebildet sein soll, ist es vorteilhaft, wenn ihre Clusteranordnungen gekrümmt ausgebildet sind und einen Kreis bzw. einen Zylindermantel bilden.

Sofern die Leuchteinrichtung in zwei Richtungen Licht abstrahlen soll, ist es vorteilhaft, wenn die Halbleiterelemente in Reihen bzw. in Spalten angeordnet sind. Sofern die Leuchteinrichtung omnidirektional Licht abstrahlen soll, ist eine Anordnung der Halbleiterelemente in Kreisen bzw. Zylindern vorteilhaft. Es sind jedoch auch andere Anordnungen der Halbleiterelemente möglich.

Durch die reflektierende Ausgestaltung der den Halb- leiterelementen zugewandten Seite des Substrats kann im Zusammenwirken mit den Strahlungsaustrittabschnitten der Halbleiterelemente selbst ein elementares optisches System geschaffen werden, wenn die Abstrahlabschnitte der Halbleiterelemente die Form einer asphärischen Linse aufweisen. Der Einsatz und die Verteilung des erzeugten Lichts kann hierdurch optimal gestaltet werden.

Die Halbleiterelemente der erfindungsgemäßen Leucht- einrichtung können aus einem anorganischen oder organischen Werkstoff, insbesondere aus Kunststoff, ausgebildet sein. Hierdurch ergeben sich hinsichtlich des Gewichts sowie der Herstellungsmöglichkeiten erhebliche Vorteile.

Darüber hinaus können die einzelnen Cluster aus einem Kunststoff vergossen oder gespritzt werden, wobei als Kunststoff ein recyclebarer Kunststoff eingesetzt werden kann. Es ist möglich, für die einzelnen Cluster einen gut wärmeleitenden Werkstoff auszuwählen, wobei auch ein druckfester Kunststoff zum Einsatz kommen kann.

Sofern die Cluster mit einem Gehäuse der Leuchteinrichtung eine kompakte Einheit bilden, entfällt jedweder hohler Konvektionsraum, wie er bei den herkömmlichen Wolframhalogenund Glühlampen sowie dem damit einhergehenden Gebrauch von metallischen Gehäusen erforderlich war. Hierdurch können die Lasten, die auf ein Flugzeug oder ein anderes Fahrzeug zurückgehen, besser auf die Fahrbahn weitergeleitet werden.

Den Halbleiterelementen kann eine Optikeinrichtung zur Strahlenbrechung und/oder Totalreflexion zugeordnet werden, wobei eine Hochleistungsoptik geschaffen werden kann, mittels der die Lichtabstrahlung optimal ausformbar ist, so daß sie den bereits eingangs erwähnten Anforderungen im Flughafenbetrieb in jedem Fall genügt.

Sofern die Außenseite der Abdeckplatte leicht reinigbar und gehärtet ist, kann der Wartungsaufwand für die Leuchteinrichtung reduziert werden. Zweckmäßigerweise sollte die Außenseite der Abdeckplatte selbstreinigend ausgebildet sein, wobei es möglich ist, die Abdeckplatte in geeigneter Weise zu beschichten.

Eine kompakte Ausgestaltung der Leuchteinrichtung kann erreicht werden, wenn die Halbleiterelemente in einem Füllkörper eingebettet angeordnet sind.

Sofern der die Halbleiterelemente einbettende Füllkörper an der aktiven Oberfläche bzw. der Lichtaustrittsöffnung der Halbleiterelemente eine Aussparung aufweist, kann der Nutzen des vorstehend erläuterten elementaren optischen Systems, zu dem die reflektierende Ausgestaltung der den Halbleiterelementen zugewandten Seite des Substrats sowie die asphärische Linse am Abstrahlabschnitt der Halbleiterelemente gehören, aufrecht erhalten werden.

Gemäß einer vorteilhaften Ausführungsform der erfindungsgemäßen Leuchteinrichtung ist der Füllkörper aus einem transparenten Werkstoff, z.B. einem transparenten Harz, insbesondere Epoxydharz, ausgebildet, dessen Brechungsindex vorzugsweise dem der Abdeckplatte entspricht. Hierdurch werden optische Verluste an der Übergangsfläche zwischen dem Füllkörper und der Abdeckplatte eliminiert.

Die einzelnen Halbleiterelemente sind zweckmäßigerweise volloder teilautomatisch hantierbar ausgebildet.

Zweckmäßigerweise sind die Cluster der erfindungsgemäßen Leuchteinrichtung Bestandteile eines redundant arbeitenden Systems, so daß in jedem Fall ein Totalausfall der erfindungsgemäßen Leuchteinrichtung zuverlässig verhindert werden kann. Da aufgrund der redundanten Ausgestaltung des durch die Cluster gebildeten Systems nicht jedweder Ausfall eines einzelnen Halbleiterelements unbedingt zum Austausch eines Clusters führen muß, kann der Aufwand für die Instandhaltung der erfindungsgemäßen Leuchteinrichtung weiter reduziert werden.

Zur weiteren Vereinfachung des Zusammenbaus, des Umbaus oder der Reparatur der erfindungsgemäßen Leuchteinrichtung ist es vorteilhaft, wenn ein oder mehrere Cluster der Leuchteinrichtung als auswechselbare Teileinheit, insbesondere als Kassette, ausgebildet ist bzw. sind. Ein Austausch einer zu der Leuchteinrichtung gehörenden Kassette kann dann in situ erfolgen.

Eine derartige Kassette ist vorteilhafterweise typcodiert, so daß sie ausschließlich entsprechend ihrer in der Leuchteinrichtung vorgegebenen Anordnung in die Leuchteinrichtung eingebaut werden kann; hierdurch werden Fehler beim Insitu-Ersatz derartiger Kassetten nahezu unmöglich gemacht.

In einer vorteilhaften Ausführungsform können zur Realisierung dieser Typcodierung an der Außenseite der Kassette Vorsprünge bzw. Vertiefungen ausgebildet sein, die Vertiefungen bzw. Vorsprüngen an der die Kassette aufnehmenden Halterung der Leuchteinrichtung zugeordnet sind. Derartige Vorsprünge bzw. Vertiefungen können sowohl im Falle der Kassette als auch im Falle der leuchteinrichtungsseitigen Halterung zu deren Verstärkung und Widerstandsfähigkeit gegen Scherbeanspruchungen beitragen. Mittels der Halterung können auf die Kassette eingeleitete Lasten und Beanspruchungen auf die Fahrbahn übertragen werden, wobei es sich hier sowohl um mechanische, nämlich statische und dynamische Lasten, als auch um thermische Belastungen handeln kann, die aus dem Erfordernis der Wärmeabfuhr resultieren. Zum Anschluß der Kassette ist an der Halterung eine gegen die Umgebung abgedichtete Fassung für elektrische Kontakte vorgesehen; um die Kassette in der gewünschten Weise an eine Energieversorgung anzuschließen, kann die Halterung auch ein Energieversorgungs- und Steuerungsteil aufweisen.

Wenn der Grundkörper bzw. das Gehäuse der Kassette mit einem elektrisch nichtleitenden Werkstoff, z.B. Harz oder Kunststoff, ganz oder teilweise gefüllt ist, kann galvanische Korrosion vermieden werden.

Sofern dem elektrisch nichtleitenden Werkstoff ein nichtleitender Füllstoff, z.B. Glas, beigegeben ist, kann die thermische Ableit- und die Belastungsaufnahmefähigkeit der Kassette gesteigert werden. Der thermische Widerstand zwischen den in der Kassette vorhandenen Clustern wird abgesenkt, so daß die Wärmeübertragung zwischen den Clustern und dem Grundkörper bzw. dem Gehäuse der Kassette auf thermischer Leitung anstelle von Konvektion beruht. Da innerhalb der Kassette keine Hohlräume vorgesehen sind, ist die Kassette inhärent wasserund gasdicht.

Sofern die Wände, insbesondere eine Bodenwand des Grundkörpers bzw. des Gehäuses der Kassette als Wärmeleiter, z.B. aus rostfreiem Stahl oder Aluminium, ausgebildet sind bzw. ist, kann der Temperaturgradient innerhalb der Kassette reduziert werden.

Die Außenseite der Kassette ist vorteilhaft zumindest an den Hauptbeanspruchungsbereichen mit einer Härtung versehen; hierdurch können auf Abrieb, Kratzer oder Punktlasten zurückgehende Beschädigungen weitestgehend vermieden werden. Darüber hinaus kann eine solche Verstärkung insbesondere an den Befestigungspunkten der Kassette dazu führen, daß die Lastund Scherbeanspruchungen besser am Aufnahmeteil der Leuchteinrichtung verteilt werden können. Nach außen exponierte Oberflächen der Kassette oder der gesamten Leuchteinrichtung können mittels Saphir oder entsprechendem Glas gehärtet sein, so daß eine Wirkungsgradabschwächung der Leuchteinrichtung aufgrund von Abrieb, physikalischen oder chemischen Beschädigungen vermieden wird.

Gemäß einer vorteilhaften Ausgestaltung der Erfindung sind der Grundkörper bzw. das Gehäuse der Leuchteinrichtung aus einem metallischen und elektrisch nichtleitenden Werkstoff ausgebildet. Der Einsatz derartiger Werkstoffe für Leuchteinrichtungen an Flughäfen war bisher nicht praktikabel, da die als Lichtquellen eingesetzten Wolframhalogen- und Glühlampen zu hohe Temperaturen erzeugten. Da die im Falle der Erfindung einsetzbaren nichtmetallischen und elektrisch nichtleitenden Werkstoffe elektrisch isolierend sind, tritt im Falle der erfindungsgemäßen Leuchteinrichtung keine galvanische Korrosion auf. Im Vergleich zu den für herkömmliche Leuchteinrichtungen einsetzbaren Werkstoffen ist der im Falle der erfindungsgemäßen Leuchteinrichtung vorgesehene Werkstoff mit einem geringen Aufwand in praktisch jede Gestalt formbar. Der bei einer erfindungsgemäßen Leuchteinrichtung einsetzbare Werkstoff kann darüber hinaus als Wärmeleiter dienen, um die von der Leuchteinrichtung erzeugte Wärme zum die Leuchteinrichtung aufnehmenden Montageteil bzw. zur Fahrbahn abzuleiten. Da der gesamte Grundkörper bzw. das gesamte Gehäuse der erfindungsgemäßen Leuchteinrichtung durch die Auswahl des nunmehr einsetzbaren Werkstoffs als Isolator ausgestaltbar ist, ist kein kostenaufwendiger separater Isolator erforderlich. Für den Grundkörper bzw. das Gehäuse der Leuchteinrichtung kann ein recyclebarer Kunststoff eingesetzt werden, wodurch sich die daraus resultierenden ökologischen Vorteile ergeben. Da die nunmehr zur Ausgestaltung der erfindungsgemäßen Leuchteinrichtung einsetzbaren Werkstoffe eine erheblich höhere Lebensdauer im Vergleich zum Stand der Technik aufweisen, verlängern sich die Nutzungszyklen der erfindungsgemäßen Leuchteinrichtung entsprechend.

Die Halbleiterelemente der erfindungsgemäßen Leuchteinrichtung können zwischen sehr niedrigen und sehr hohen Potentialen elektrisch regelbar sein, wobei der Wellenlängenbereich der abgegebenen Strahlung über den gesamten Regelungsbereich sehr eng und hinsichtlich Position und Weite durchweg konstant ist, so daß über den gesamten Regelungsbereich Licht ein- und derselben Farbe abstrahlbar ist.

Wenn die erfindungsgemäße Leuchteinrichtung unterschiedliche Halbleiterelemente zur Abstrahlung von Licht in unterschiedlichen Farben aufweist, wobei das abgestrahlte Licht unterschiedlicher Halbleiterelemente beliebig mischbar ist, kann das von der Leuchteinrichtung abgestrahlte Licht hinsichtlich Farbe und/oder Intensität beliebig eingestellt werden. Es ist somit möglich, mittels ein- und derselben Leuchteinrichtung Licht unterschiedlicher Farbe abzustrahlen. Hierzu kann es vorteilhaft sein, wenn die die Leuchteinrichtung bildenden Cluster aus Halbleiterelementen unterschiedlicher Art bestehen. Der Wirkungsgrad einer solchen Leuchteinrichtung kann dadurch erhöht werden, daß die Halbleiterelemente ihr Licht mit einer sehr schmalen Farbbandbreite und bei einer hohen Sättigung abstrahlen. Da sich die Farbe des abgestrahlten Lichts mit der Regelung der Intensität nicht spürbar ändert, kann eine Farbeinstellungsauswahl hinsichtlich des Wirkungsgrades erfolgen. Mit einer derart ausgestalteten erfindungsgemäßen Leuchteinrichtung kann Licht praktisch im gesamten sichtbaren Farbbereich abgestrahlt werden, wobei alle technisch sinnvoll verwendbaren Farben möglich sind. Hierbei ist keine mechanische Bewegung von Lampen, Filtern oder anderer physikalisch zu bewegender Teile erforderlich; die entsprechenden Eigenschaften der erfindungsgemäßen Leuchteinrichtung ergeben sich aufgrund statischer, gesteuerter Bauteile. Durch die Addition von Farben, die durch einzelne Halbleiterelemente erzeugt werden, kann das vom menschlichen Auge sichtbare Licht jede Farbe aufweisen, da eine Auflösung des Lichts unterschiedlicher Halbleiterelemente nach zwei Bogenminuten entsprechend einer Entfernung von 0,5 m von der Leuchteinrichtung nicht mehr auflösbar ist.

Die Leuchteinrichtung weist eine Steuereinrichtung zur Steuerung der Energieversorgung auf, mittels der die Leuchteinrichtung dimm- und/oder schaltbar ist.

Wenn diese Steuereinrichtung einen elektronischen Lichtregler aufweist, ist die Ansprechempfindlichkeit der Halbleiterelemente an die übliche Ansprechempfindlichkeit von Glüh- bzw. Wolframhalogenlampen anpaßbar, so daß die erfindungsgemäße Leuchteinrichtung mit herkömmlichen, Wolframhalogen- und Glühlampen aufweisenden Leuchteinrichtungen im gleichen System kombiniert werden kann.

Die Steuereinrichtung kann durch eine Energiever- sorgungsleitung und/oder eine separate elektrische oder optische Datenleitung in Signalverbindung mit einer Zentraleinheit stehen. Die Steuereinrichtung kann zur Regelung der Abstrahlintensität der Halbleiterelemente dienen. Darüber hinaus kann mittels der Steuereinrichtung vorgegeben werden, in welche von mehreren möglichen Richtungen Licht abgestrahlt wird, sofern die Leuchteinrichtung als bidirektionale oder omnidirektionale Leuchteinrichtung ausgebildet ist.

Mittels dieser Steuereinrichtung ist die Abstrahlintensität und die Anzahl der Licht unterschiedlicher Farbe abstrahlenden Halbleiterelemente einstellbar, so daß mittels der erfindungsgemäßen Leuchteinrichtung Licht beliebiger Farbe in beliebiger Intensität abstrahlbar ist.

Darüber hinaus kann die Steuereinrichtung eine bestimmte Aufeinanderfolge von Aus- und gegebenenfalls unterschiedlichen Ein-Betriebszuständen einstellen.

Selbstverständlich ist es gemäß einer vorteilhaften Ausführungsführungsform der erfindungsgemäßen Leuchteinrichtung möglich, mittels der Steuereinrichtung den Betriebszustand und die Funktionsfähigkeit der als Lichtquelle fungierenden Halbleiterelemente zu überwachen.

Wenn ein oder mehrere Cluster der erfindungsgemäßen Leuchteinrichtung rotes, grünes bzw. blaues Licht abstrahlende Halbleiterelemente aufweist bzw. aufweisen, die alternierend angeordnet sind, ist es möglich, das beim Betrieb eines Flughafens besonders wichtige variable weiße Licht in jedweder gewünschten Form abzustrahlen. Hierdurch kann die Leuchteinrichtung in optimaler Weise an unterschiedliche klimatische Bedingungen angepaßt werden, wobei darüber hinaus selbstverständlich auch unterschiedliche Lichtverhältnisse berücksichtigt werden können. Da rot, blau und grün an den äußeren Ekken eines Farbdreiecks angeordnet sind und die Leuchteinrichtung entsprechende Halbleiterelemente in der gewünschten Anzahl aufweisen kann, können mittels dieser Leuchteinrichtung sämtliche nach den eingangs bereits genannten Standards vorgesehene Farben erzeugt werden. Darüber hinaus können mittels der erfindungsgemäßen Leuchteinrichtung die Anforderungen hinsichtlich der Lichtausbreitung ohne weiteres erfüllt werden.

Sofern mittels der erfindungsgemäßen Leuchteinrichtung lediglich rotes, gelbes, orangenes und grünes Licht abgestrahlt werden soll, ist es ausreichend, wenn ein oder mehrere Cluster rotes bzw. grünes Licht abstrahlende Halbleiterelemente aufweist bzw. aufweisen, die alternierend angeordnet sind. Blaues Licht abstrahlende Halbleiter- elemente sind in diesem Fall nicht erforderlich, da sie für die Lichtabstrahlung in den vorstehend erwähnten Farben keine Bedeutung haben. Sofern Licht nur in den genannten vier Farben, nämlich rot, gelb, orange und grün, erzeugt werden soll, führt der Verzicht auf blaues Licht abstrahlende Halbleiterelemente dazu, daß die erfindungsgemäße Leuchteinrichtung bei gleicher möglicher Lichtintensität mit geringeren Abmessungen gestaltet werden kann.

Es ist möglich, einander benachbarte Halbleiterelementreihen eines Clusters zueinander versetzt anzuordnen, wodurch u.U. eine dichtere Besetzung eines Substrats mit Halbleiter- elementen erzeugt wird.

Da die Steuereinrichtung der erfindungsgemäßen Leuchteinrichtung eine Pulsweitenmodulationsvorrichtung aufweist, mittels der die den Halbleiterelementen zugeführte elektrische Energie regelbar ist, ergibt sich für den Betrieb der erfindungsgemäßen Leuchteinrichtung ein hoher Wirkungsgrad, wobei die zur Verfügung gestellte Energie mittels der Pulsweitenmodulationsvorrichtung in optimaler Weise an die Anforderungen der Leuchteinrichtung bzw. die Anforderungen der Halbleiterelemente angepaßt werden kann. Es ist keine thyristorgesteuerte Energieversorgung erforderlich, die ihrerseits typischerweise Harmonisierungs- und reaktive Verluste in der Hauptquelle verursachen würde. Darüber hinaus ergibt sich beim Betrieb der erfindungsgemäßen Leuchteinrichtung kein stroboskopischer Effekt, der die korrekte Wahrnehmung der Leuchteinrichtung beeinträchtigen könnte.

Im folgenden wird die Erfindung anhand von Ausführungsformen unter Bezugnahme auf die Zeichnung näher erläutert, wobei insbesondere die Anwendung der Erfindung im Fluhafenbereich beschrieben wird. Es zeigen:
- FIG 1: eine prinzipielle Darstellung eines als lichtabstrahlende Diode ausgebildeten Halbleiterelements;
- FIG 2: bis 4 prinzipiell in Vorder-, Seiten- und Oberansicht eine erste Ausführungsform eines Clusters einer erfindungsgemäßen Leuchteinrichtung;
- FIG 5: bis 7 prinzipiell in Vorder-, Seiten- und Oberansicht eine zweite Ausführungsform eines Clusters der erfindungsgemäßen Leuchteinrichtung;
- FIG 8: eine Draufsicht auf ein erstes Ausführungsbeispiel der erfindungsgemäßen Leuchteinrichtung;
- FIG 9: eine Draufsicht auf ein zweites Ausführungsbeispiel der erfindungsgemäßen Leuchteinrichtung;
- FIG 10: eine Draufsicht auf ein drittes Ausführungsbeispiel der erfindungsgemäßen Leuchteinrichtung;
- FIG 11: eine Schnittdarstellung des z.B. in FIG 8 dargestellten Ausführungsbeispiels der erfindungsgemäßen Leuchteinrichtung;
- FIG 12: eine FIG 11 entsprechende Darstellung, wobei die Leuchteinrichtung aus Clustern gemäß den FIG 5 bis 7 ausgebildet ist;
- FIG 13: eine Ausführungsform einer herkömmlichen Leuchteinrichtung;
- FIG 14: bis 17 Prinzipdarstellungen von unterschiedliche Halbleiterelemente aufweisenden Clustern;
- FIG 18: eine Darstellung der für Flughafenbefeuerungsanlagen vorgesehenen festgelegten Farben;
- FIG 19: eine Prinzipdarstellung der Steuerung, Regelung und Überwachung von Flughafenbefeuerungsanlagen;
- FIG 20: eine Prinzipdarstellung der Ausgangsseite einer Pulsweitenmodulationsvorrichtung der erfindungsgemäßen Leuchteinrichtung;
- FIG 21: eine Steuereinrichtung der erfindungsgemäßen Leuchteinrichtung; und
- FIG 22: eine abgewandelte Steuereinrichtung der erfindungsgemäßen Leuchteinrichtung.

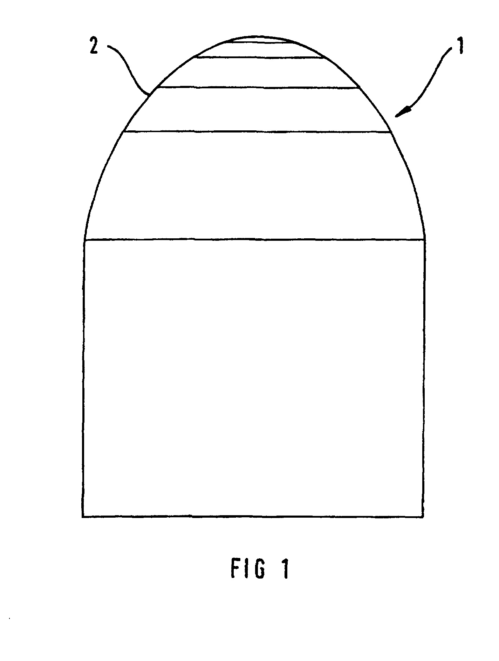

Eine erfindungsgemäße Leuchteinrichtung hat eine Vielzahl von Halbleiterelementen, die im Falle der im folgenden beschriebenen Ausführungsformen als lichtabstrahlende Dioden 1 ausgebildet sind. Die in FIG 1 im Prinzip dargestellte lichtabstrahlende Diode 1 hat in demjenigen Bereich, in dem das erzeugte Licht aus der Diode 1 austritt, eine Ausgestaltung als asphärische Linse 2, wie dies insbesondere in FIG 1 dargestellt ist.

Durch die asphärische Ausgestaltung der lichtbrechenden Linse 2 kann die Verteilung des durch die Diode 1 abgestrahlten Lichts optimiert werden.

Bei der lichtabstrahlenden Diode 1 handelt es sich insbesondere um eine helle bzw. superhelle LED.

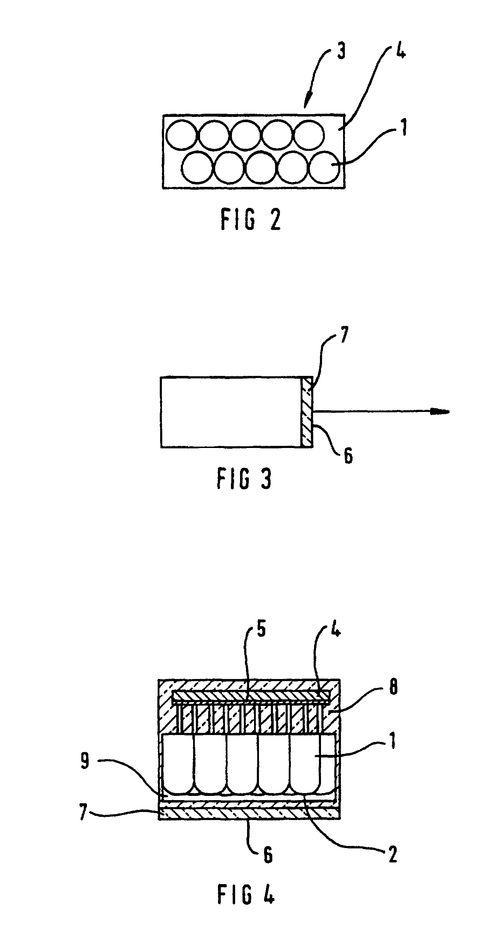

Die erfindungsgemäße Leuchteinrichtung setzt sich aus einer Vielzahl der vorstehend bechriebenen lichtabstrahlenden Dioden 1 zusammen. Eine Mehrzahl derartiger lichtabstrahlender Dioden 1 kann zu einem in den FIG 2 bis 4 dargestellten Cluster 3 zusammengefaßt sein. Bei dem in FIG 2 bis 4 dargestellten Ausführungsbeispiel hat das Cluster 3 zehn lichtabstrahlende Dioden 1, die in zwei übereinander angeordneten Reihen zu je fünf lichtabstrahlenden Dioden 1 angeordnet sind.

Es ist möglich, daß die Mittellinien der Dioden 1 einer Reihe in bezug auf die Mittellinien der Dioden 1 einer benachbarten Reihe geneigt angeordnet sind.

Sämtliche lichtabstrahlende Dioden 1 dieses Clusters 3 sind fassungsfrei auf einem Substrat 4 angeordnet, welches als Halterung für die lichtabstrahlenden Dioden 1 dient. Das Cluster 3 hat ein elementares optisches System, zu dem eine reflektierende Schicht 5 gehört, die auf der den lichtabstrahlenden Dioden 1 zugewandten Seite des Substrats 4 aufgebracht ist. Zu diesem elementaren optischen System gehören die asphärischen Linsen 2 der lichtabstrahlenden Dioden 1, die den Einsatz und die Verteilung des durch die lichtabstrahlenden Dioden 1 erzeugten Lichts optimieren. Die asphärische Linse 2 bildet jeweils die eigentliche aktive Oberfläche bzw. die Lichtaustrittöffnung der lichtabstrahlenden Dioden 1.

Das in den FIG 2 bis 4 dargestellte Cluster 3 ist als mit anderen gleichartigen oder ähnlichen Clustern 3 zusammenfügbares Modulteil ausgestaltet. An der Strahlungsaustrittfläche 6 ist das Cluster 3 mittels einer Abdeckplatte 7 geschlossen, die bei dem in den FIG 2 bis 4 dargestellten Cluster 3 parallel zum Substrat 4 angeordnet ist. Die Strahlungsaustrittfläche 6 des Clusters 3 entspricht hinsichtlich ihren Abmessungen im wesentlichen der Fläche des Substrats 4, die nahezu vollständig von den lichtabstrahlenden Dioden 1 abgedeckt ist.

Die lichtabstrahlenden Dioden 1 des Clusters 3 sind von einem den Raum zwischen dem Substrat 4 und der Abdeckplatte 7 ausfüllenden Füllkörper 8 umgeben, der aus einem transparenten Werkstoff, z.B. aus einem Harz, hergestellt ist. Der Füllkörper 8 hat eine Aussparung 9, die unmittelbar dem durch die asphärischen Linsen 2 der lichtabstrahlenden Dioden 1 des Clusters 3 gebildeten Abstrahlabschnitt des Clusters 3 zugeordnet ist; die Aussparung 9 wird zwischen der aktiven Oberfläche der lichtabstrahlenden Dioden 1 des Clusters 3 und dem Füllkörper 8 ausgebildet, um den Nutzen des durch die reflektierende Schicht 5 des Substrats 4 und die asphärischen Linsen 2 der lichtabstrahlenden Dioden 1 gebildeten elementaren optischen Systems nicht zu verlieren.

Der Brechungsindex des den Füllkörper 8 bildenden Werkstoffs entspricht zweckmäßigerweise demjenigen des die Abdeckplatte 7 bildenden Werkstoffs. Hierdurch können optische Verluste an der Kontaktfläche zwischen dem Füllkörper 8 und der Abdeckplatte 7 verhindert werden.

Die Außenseite der Abdeckplatte 7 des Clusters 3 ist gehärtet und glatt ausgestaltet; sie kann darüber hinaus selbstreinigend sein.

Bei der Ausführungsform des Clusters 3, wie sie in den FIG 2 bis 4 dargestellt ist, ist die durch den Pfeil in FIG 3 dargestellte Abstrahlrichtung des Clusters 3 senkrecht zur Ebene des Substrats 4 angeordnet.

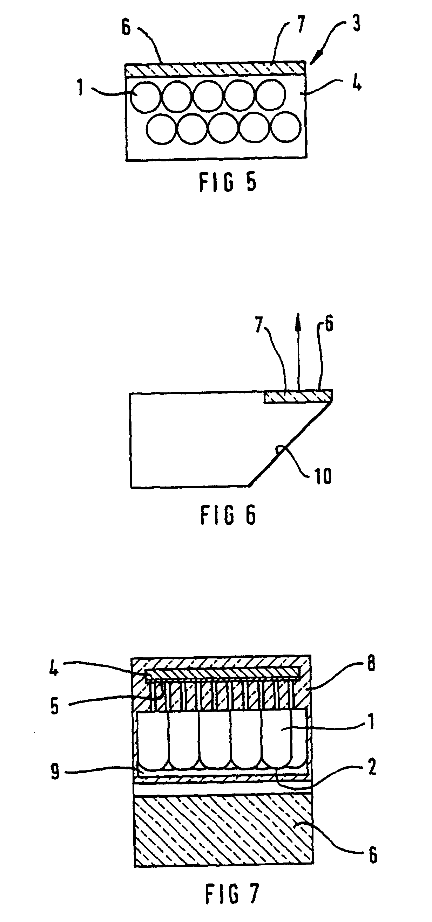

Bei der anhand der FIG 5 bis 7 dargestellten Ausführungsform des Clusters 3 wird die durch den Pfeil in FIG 6 dargestellte Abstrahlrichtung des Clusters 3 um 90 Grad abgelenkt, wozu eine zwischen den lichtabstrahlenden Dioden 1 und der Strahlungsaustrittfläche 6 des Clusters 3 angeordnete Spiegeloberfläche 10 vorgesehen ist. Die Spiegeloberfläche 10 richtet die Lichtstrahlen im dargestellten Ausführungsbeispiel um 90 Grad um, so daß sie parallel zur Ebene des Substrats 4 aus dem Cluster 3 durch dessen Strahlungsaustrittfläche 6 bzw. durch dessen Abdeckplatte 7 austreten.

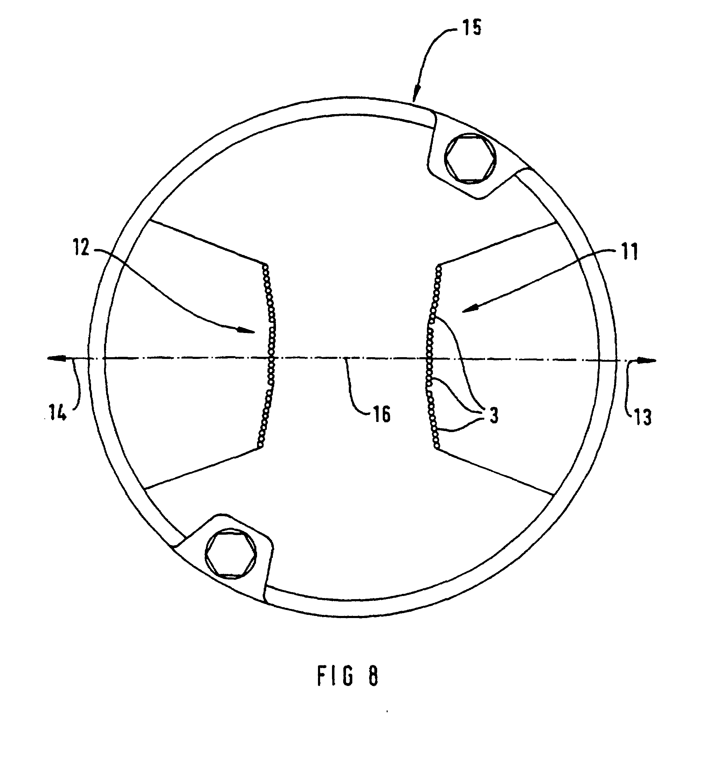

In FIG 8 ist ein Taxiway-Mittel- und Haltelicht für einen geradlinigen Abschnitt eines Taxiway dargestellt. Hierbei handelt es sich um eine sog. bidirektionale Leuchteinrichtung, mit einer ersten Clusteranordnung 11, die in die eine, durch den Pfeil 13 gekennzeichnete Richtung abstrahlt, und einer zweiten Clusteranordnung 12, die in die zu der der Clusteranordnung 11 entgegengesetzte Richtung, die durch den Pfeil 14 gekennzeichnet ist, abstrahlt.

Bei der in FIG 8 dargestellten Leuchteinrichtung handelt sich um eine kompakte Einrichtung, wobei die beiden Clusteranordnungen 11, 12 in einem gemeinsamen Gehäuse 15 angeordnet sind. Derjenige Bereich des Innenraums des Gehäuses 15, der zwischen den beiden Clusteranordnungen 11, 12 sowie in FIG 8 seitlich der beiden Clusteranordnungen 11, 12 angeordnet ist, ist mit einem geeigneten Werkstoff gefüllt. Das Gehäuse 15 kann metallisch ausgebildet sein.

Außer, daß sie in unterschiedliche Richtungen abstrahlen, entsprechend die Clusteranordnungen 11, 12 einander, so daß im folgenden lediglich die in FIG 8 rechte Clusteranordnung 11 im einzelnen beschrieben wird.

Die Clusteranordnung 11 hat drei Cluster 3, die in einer Reihe nebeneinander angeordnet sind, wobei jedes dieser Cluster 3 beispielsweise die anhand der FIG 2 bis 4 dargestellte Ausführungsform aufweisen kann. Das mittlere Cluster 3 ist rechtwinklig zur Mittellinie 16 des Taxiway angeordnet, wobei es diese Mittellinie 16 in seinem mittleren Bereich schneidet. Die beiden äußeren Cluster 3 schließen mit dem mittleren Cluster 3 jeweils einen Winkel ein, der geringfügig kleiner als 180 Grad ist. Hierdurch wird eine effiziente horizontale Lichtverteilung erreicht. Die Abdeckung der in FIG 8 dargestellten Leuchteinrichtung hat eine gehärtete, glatte und damit in einfacher Weise reinigbar ausgestaltete Außenfläche.

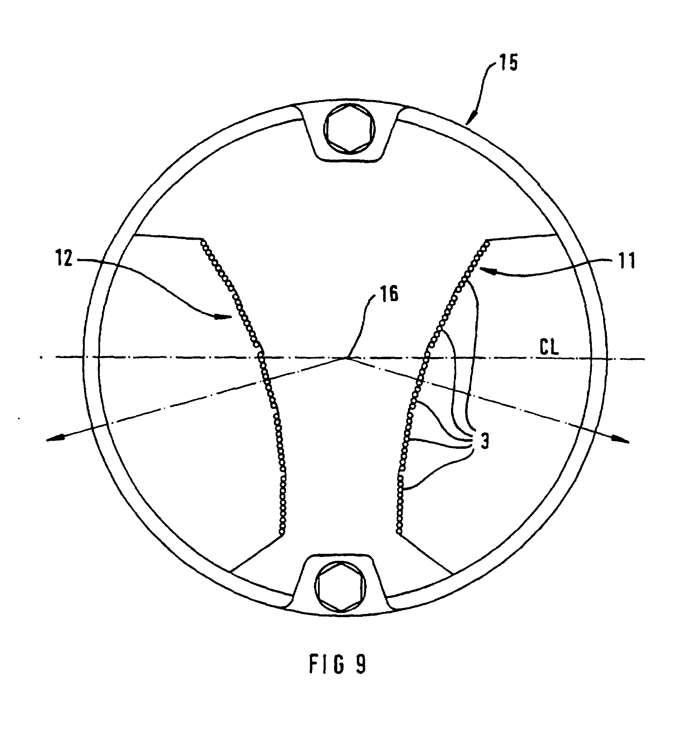

Die in FIG 9 dargestellte Leuchteinrichtung dient ebenfalls zur Markierung der Mittellinie eines Taxiways, jedoch an einem gekrümmten Abschnitt desselben, und als ein dort einsetzbares Haltelicht. Sie unterscheidet sich von der in FIG 8 dargestellten Leuchteinrichtung dadurch, daß die Abstrahlrichtungen der beiden Clusteranordnungen 11, 12 zueinander geneigt sind und daß je Clusteranordnung 11, 12 fünf einzelne Cluster 3 vorgesehen sind, bei denen es sich ebenfalls um solche der in den FIG 2 bis 4 dargestellten Ausführungsformen handeln kann. Das mittlere Cluster 3 der beiden Clusteranordnungen 11, 12 ist, da es sich um einen gekrümmten Abschnitt des Taxiway handelt, zur Mittellinie CL der Leuchteinrichtung versetzt und geneigt. Die Cluster 3 der beiden Clusteranordnungen 11, 12 schließen mit dem jeweils benachbarten Cluster 3 ebenfalls einen Winkel Alpha ein, der etwas kleiner als 180 Grad ist.

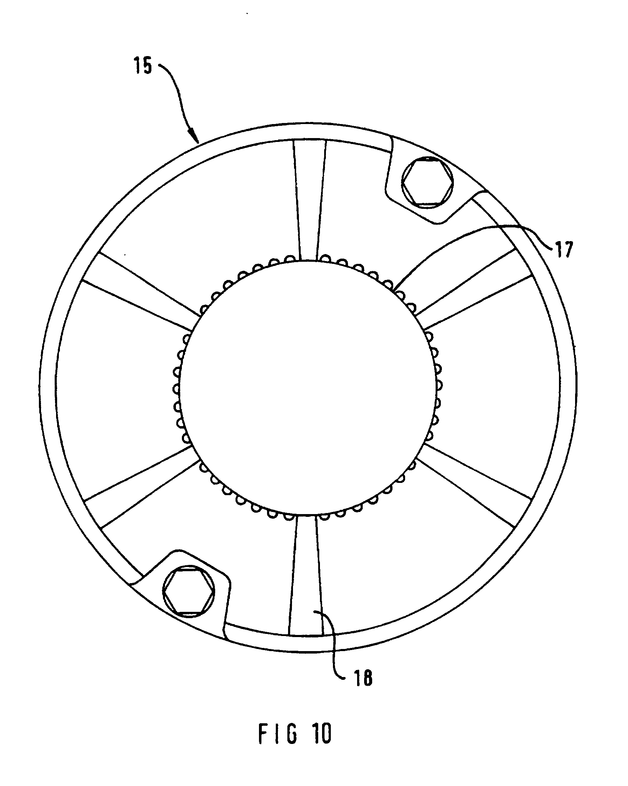

FIG 10 zeigt eine in sämtliche Richtungen wirkende Leuchteinrichtung, die ebenfalls zur Markierung eines Taxiway vorgesehen sein kann. Bei der dargestellten Ausführungsform sind sechs gekrümmte Cluster 17 vorgesehen, die miteinander einen geschlossenen Kreis bilden und voneinander durch Strukturrippen 18 getrennt sind. Mittels der sechs gekrümmten Cluster 17 kann Licht praktisch in alle Richtungen abgestrahlt werden.

Bei den vorstehend anhand der FIG 8 bis 10 beschriebenen Leuchteinrichtungen kann die äußere optische Oberfläche transparent und hart ausgestaltet sein, z.B. aus Saphir oder Glas mit einer gehärteten Oberfläche, so daß eine Wirkungsgradabschwächung der Leuchteinrichtungen aufgrund von Abriebund physikalischen oder chemischen Beschädigungen vermieden wird. Die äußere optische Oberfläche kann derart gehärtet bzw. beschichtet sein, daß etwaige fresnell'sche Verluste reduziert werden.

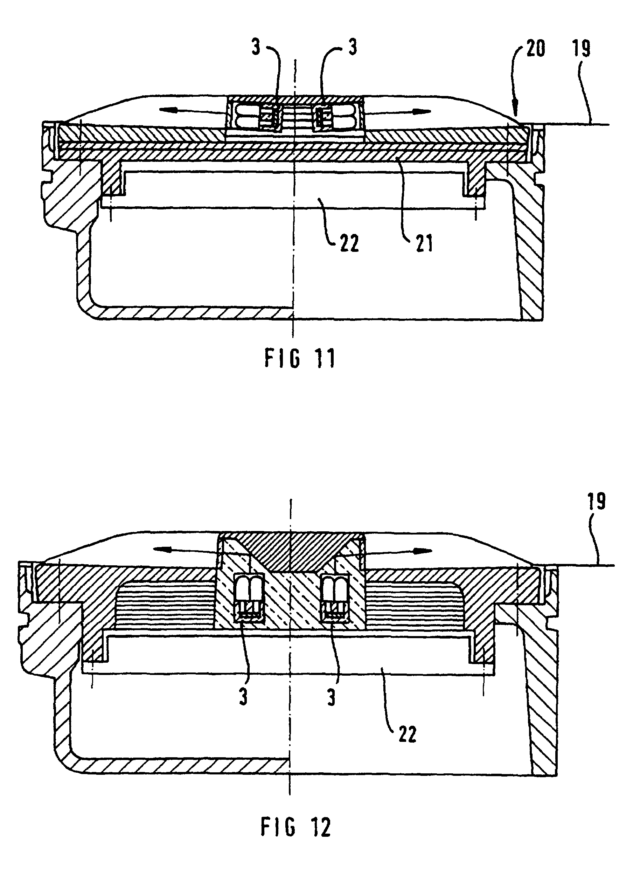

In den FIG 11 und 12 sind Querschnitte von Leuchteinrichtungen dargestellt, die etwa den in den FIG 8 bis 10 dargestellten Leuchteinrichtungen entsprechen und die als Unterflurleuchten ausgebildet sind. Sie unterscheiden sich im wesentlichen dadurch, daß in FIG 11 Cluster 3 der anhand der FIG 2 bis 4 beschriebenen Ausführungsform eingesetzt werden, wohingegen im Falle der Unterflurleuchte gemäß FIG 12 Cluster der anhand der FIG 5 bis 7 erläuterten Ausführungsform zum Einsatz kommen.

Die Leuchteinrichtung gemäß FIG 11 und 12 ist mit wesentlichen Teilen unterhalb des Bodenniveaus 19 angeordnet. Die in den FIG 11 und 12 dargestellten Pfeile kennzeichnen die Abstrahlrichtungen der Unterflurleuchten. Wie insbesondere aus FIG 11 hervorgeht, ist der das bzw. die Cluster 3 aufweisende Teil der Ünterflurleuchte in Form einer Kassette 20 ausgestaltet, die als solche eine ohne großen Aufwand austauschbare Einheit bildet. Eine derartige Unterflurleuchte kann eine oder mehrere solcher Kassetten 20 aufweisen. Je nach Ausgestaltung der Leuchteinrichtung können mehrere gleichartige oder ggf. auch unterschiedliche Kassetten zu der Leuchteinrichtung zusammengestellt sein.

Eine solche Kassette 20 ist in einer vorteilhaften Ausführungsform bauartcodiert, wobei die Bauartcodierung ihrer Anordnung innerhalb der Leuchteinrichtung entspricht. Hierdurch werden Fehler bei einem Insitu-Ersatz der Kassette 20 nahezu unmöglich. Die Bauartcodierung kann durch kassettenseitige Vorsprünge oder Aussparungen verwirklicht sein, wobei dann entsprechende Aussparungen bzw. Vorsprünge in einem Aufnahmeteil 21 der Leuchteinrichtung vorgesehen sind. Derartige reliefartige Ausgestaltungen bzw. mit Eindrücken versehene Ausgestaltungen der Kassette 20 bzw. des Aufnahmeteils 21 können darüber hinaus zur Widerstandsfähigkeit gegen Scherbeanspruchungen beitragen.

Der Grundkörper bzw. das Gehäuse der Kassette 20 ist ganz oder teilweise mit einem elektrisch nichtleitenden Werkstoff gefüllt, z.B. einem Harz oder Kunststoff; hierdurch wird galvanische Korrosion vermieden. Dem nichtleitenden Werkstoff kann ein thermisch leitendes Material, beispielsweise Glas, beigegeben werden, um so die thermische Ableit- und die Belastungsaufnahmefähigkeit der Kassette 20 zu steigern.

Die Wärmeübertragung zwischen den Clustern 3 und dem Grundkörper bzw. dem Gehäuse der Kassette 20 basiert dann auf thermischer Leitung anstelle von Luft-/Gas-Konvektion, so daß der thermische Widerstand der Kassette 20 erheblich reduziert ist.

Da kein Konvektionsgas vorhanden ist, führen etwaige Flugzeug- oder Kraftfahrzeuglasten, die auf die Kassette 20 wirken, nicht zu Biege-, sondern ausschließlich zu Druckspannungen, die einfacher aufgenommen bzw. abgeleitet werden können.

Da innerhalb der Kassette 20 keine Hohlräume und damit kein Konvektionsgas vorhanden ist, ist die Kassette 20 inhärent wasser- und gasdicht.

Der in der Kassette 20 stattfindende Temperaturanstieg beträgt lediglich weniger als 20 % des Temperaturanstiegs bei einer Leuchteinrichtung mit einer herkömmlichen Wolframhalogenlichtquelle, so daß Flugzeug- oder Fahrzeugreifen weitaus geringer beansprucht werden und Verbrennungen von Betriebsund Wartungspersonal ausgeschlossen werden können.

Die Bodenwand der Kassette 20 kann durch einen Wärmeleiter, z.B. rostfreien Stahl oder beschichtetes Aluminium, ausgebildet sein; hierdurch wird der Temperaturgradient innerhalb der Kassette 20 reduziert.

Die Außenseite der Kassette 20 kann gehärtet, z.B. aus einem rostfreien Stahl, ausgebildet sein, so daß auf Abrieb, Kratzer oder Punktlasten zurückgehende Beschädigungen vermieden werden.

Befestigungspunkte der Kassette 20 können verstärkt ausgebildet sein, so daß Last- und Scherbeanspruchungen auf der die Kassette 20 lagernden Struktur bzw. dem Aufnahmeteil 21 besser verteilt werden können.

Die Einleitung von Energie bzw. die Übertragung von Signalen zur Kassette 20 wird durch selbstreinigende und selbstabdichtende Kontakte bewerkstelligt. Ein wasser- und dampfdichter Schutz gegen die Umgebung ist vorgesehen.

Aufgrund der Ausgestaltung der Leuchteinrichtung mit lichtabstrahlenden Dioden 1 geschieht die elektrische Energieübertragung zwischen der Kassette 20 und den übrigen Teilen der Leuchteinrichtung auf einem sehr niedrigen Spannungsniveau, so daß ein "heißer" Kassettenersatz ohne die Gefahr der Beschädigung der elektrischen Kontakte und ohne das Risiko eines elektrischen Schlags für das Personal durchführbar ist; das Spannungsniveau liegt hierbei unterhalb von einer Spitzenspannung von ca. 25V.

Die Kassette 20 ist oberhalb einer Energieversorgungs- und Steuereinrichtung 22 der Leuchteinrichtung angeordnet.

Da die Kassette 20 weitestgehend ohne Hohlräume konstruiert ist, widersteht sie mechanischen Beanspruchungen von 100G und Schwingungsbeanspruchungen bis zu 30G, wobei es unerheblich ist, ob die Leuchteinrichtung energiert oder nichtenergiert ist.

Mittels des Aufnahmeteils 21 werden auf die Kassette 20 eingeleitete Lasten und Beanspruchungen auf die Fahrbahn übertragen. Bei diesen Belastungen handelt es sich um statische und dynamische mechanische Lasten sowie um thermische Lasten, die aus dem Erfordernis der Abfuhr der erzeugten Wärme entstehen.

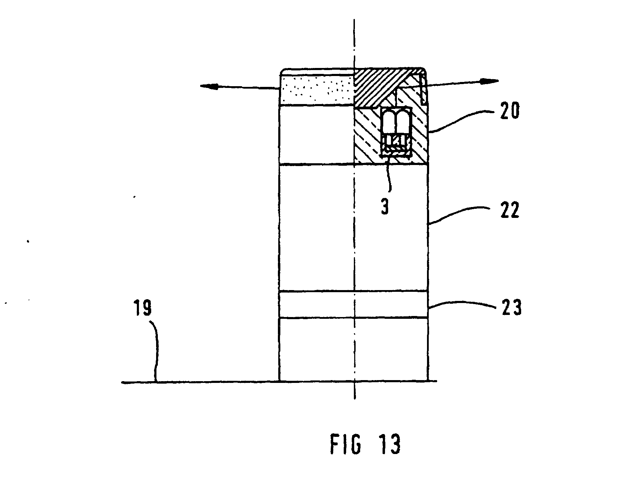

FIG 13 zeigt eine Ausführungsform der Leuchteinrichtung, die in herkömmlicher Weise oberhalb einer Fahrbahn angeordnet ist. Auch dort ist eine modulartig austauschbar gestaltete Kassette 20 oberhalb einer Energieversorgungs- und Steuereinrichtung 22 angeordnet, wobei die Energieversorgungs- und Steuereinrichtung 22 mittels einer lösbaren Kupplung 23 oberhalb des Bodenniveaus 19 angeordnet wird.

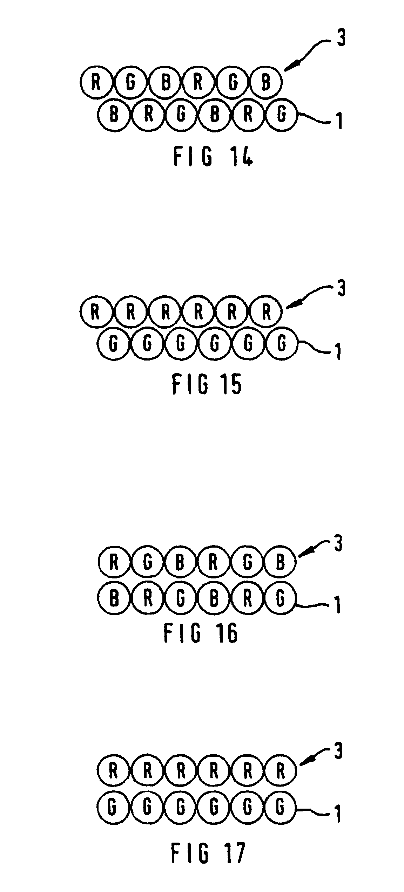

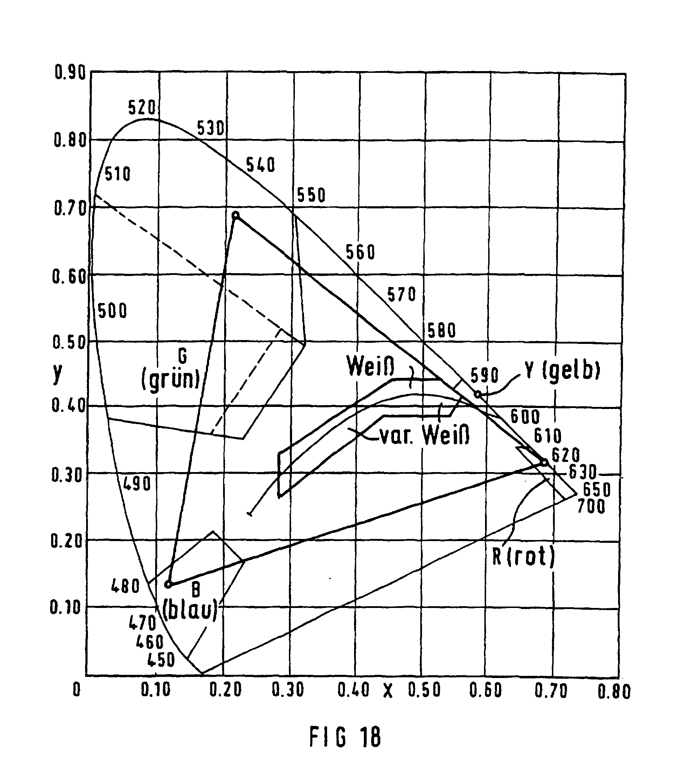

FIG 14 zeigt in Prinzipdarstellung ein Cluster 3, welches aus roten, grünen und blauen lichtabstrahlenden Dioden 1 zusammengesetzt ist. Die lichtabstrahlenden Dioden 1 jeder Farbe sind hinsichtlich der Intensität, mit der sie Licht abstrahlen, in noch zu beschreibender Weise regelbar. Dadurch, daß die lichtabstrahlenden Dioden 1 jeder der drei Farben in der jeweils gewünschten Intensität Licht abstrahlen können, kann mittels des in FIG 14 gezeigten Clusters 3 praktisch Licht in sämtlichen sichtbaren Farben abgestrahlt werden, wobei darüber hinaus dieses Licht mit unterschiedlicher Intensität abstrahlbar ist. Durch die Farben rot, grün und blau, wird, wie sich insbesondere im Zusammenhang mit FIG 18 ergibt, die Möglichkeit geschaffen, Licht jeder Intensität und in jeder für mögliche Signale denkbaren Farbe abzustrahlen.

Mit einer derartigen Ausgestaltung eines Clusters 3 kann auch weißes Licht mit unterschiedlicher Intensität abgestrahlt werden, was bei herkömmlichen Leuchteinrichtungen Schwierigkeiten bereitet. Dies geht darauf zurück, daß rot, grün und blau im Farbspektrum etwa an den Ecken eines Dreiecks angeordnet sind, welches den sichtbaren Farbbereich beschreibt, wie aus FIG 18 hervorgeht.

Das aus dem Cluster 3 austretende Licht ist in einer Entfernung von zwei Bogenminuten entsprechend einem Beobachtungsabstand von 10 m nicht mehr in einzelne Lichtquellen differenzierbar, so daß für jedwede Zwecke Licht in der gewünschten Farbe und Intensität geschaffen werden kann. Dies gilt insbesondere auch für die im Flugwesen geltenden Standards ICAO, FAA, DOT, CIE, MIL-C-25050.

Insbesondere für die Erzeugung variablen weißen Lichts eignet sich am besten ein Cluster 3, welches, wie bereits erwähnt, lichtabstrahlende Dioden 1 enthält, deren Licht rot, blau bzw. grün ist. Diese drei Farben sind, wie bereits erwähnt, an den äußeren Ecken des aus FIG 18 ersichtlichen Dreiecks angeordnet, welches den genannten Standards entspricht.

Zur Kennzeichnung von Taxiway-Markierungen und Routenhinweisen für Flugzeuge sind lediglich vier Farben erforderlich, nämlich rot (R), gelb (Y), orange und grün (G). Für eine solche Anwendung ist es einfacher und weniger aufwendig, wenn ein Cluster 3 lediglich zwei unterschiedliche Arten von lichtabstrahlenden Dioden 1 enthält, nämlich solche, die rotes Licht und solche die grünes Licht abstrahlen. Ein derartiges Cluster 3 ist prinzipiell in FIG 15 dargestellt. Hierbei kann auf blaues Licht abstrahlende Dioden 1 verzichtet werden.

Die Cluster 3 gemäß Figur 16 und Figur 17 unterscheiden sich von den in FIG 14 und FIG 15 dargestellten Clustern 3 lediglich dadurch, daß die einzelnen lichtabstrahlenden Dioden 1 nicht in zueinander versetzten Reihen angeordnet sind; vielmehr sind im Falle der Cluster 3 gemäß den FIG 16 und 17 die unter- bzw. übereinander angeordneten lichtabstrahlenden Dioden 1 nicht zueinander versetzt.

Lichtabstrahlende Dioden 1 sind von unterschiedlichen Herstellern und in unterschiedlichen Farben am Markt erhältlich. So stellt beispielsweise die Firma Toshiba LED zur Abstrahlung von Licht in roter, orangener und gelber Farb her; die Firma Hewlett-Packard stellt Dioden zur Abstrahlung von Licht in bernsteinfarbener, oranger, rot-oranger und roter Farbe her; die Firma Ledtronics stellt Dioden zur Abstrahlung von Licht in grüner, gelber, oranger, roter und blauer Farbe her.

Die Steuerung der Energiezufuhr zu den lichtabstrahlenden Dioden 1 wird mit minimalen Verlusten durch eine Pulsweitenmodulationsvorrichtung 24 erreicht, wobei der Spitzenstrom in einem Initialisierungsverfahren eingestellt wird, mittels dem die Bauart der lichtabstrahlenden Diode entsprechend dem Ergebnis eines Vergleichs des Spannungsabfalls über eine Kette von lichtabstrahlenden Dioden mit dem Spannungsabfall über eine Bezugs-LED identifiziert wird.

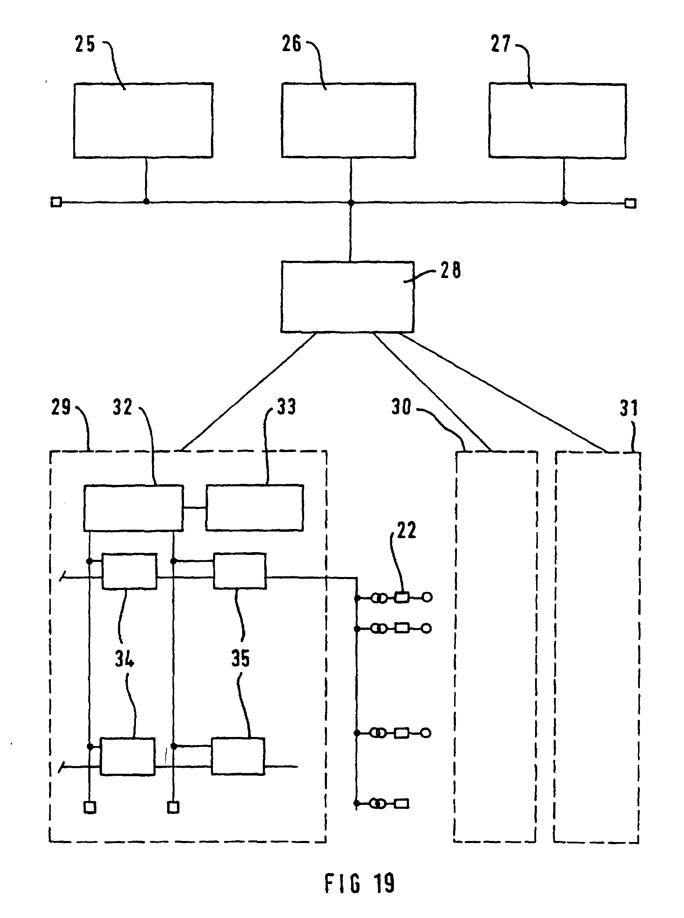

Anhand von FIG 19 wird nunmehr die Steuerung bzw. Einbeziehung und Integration der erfindungsgemäßen Leuchteinrichtungen in ein Steuersystem eines Flughafens erläutert.

Eine Flugverkehrszentrale 25, eine Ausweichzentrale 26 sowie eine Wartungszentrale 27 sind in geeigneter Weise an eine Steuerung 28 für Fahrtrouten und Gates angeschlossen. Diese Steuerung 28 wiederum ist mit Unterstationen 29, 30, 31 verbunden, von denen in FIG 19 lediglich die Unterstation 29 eingehender dargestellt ist.

Es sei darauf hingewiesen, daß in FIG 19 eine sternförmige Verbindung zwischen der Steuerung 28 und den Unterstationen 29, 30, 31 dargestellt ist, daß es aber grundsätzlich auch möglich ist, eine Schleifenverbindung oder eine Busverbindung vorzusehen.

Die Unterstation 29 hat eine Untersteuereinrichtung 32 mit einem Panel 33. An die Untersteuereinrichtung 32 sind jeweils über ein CCR 34 und eine Masterschaltung 35 die eigentlichen Steuereinrichtungen 22 der erfindungsgemäßen Leuchteinrichtungen angeschlossen.

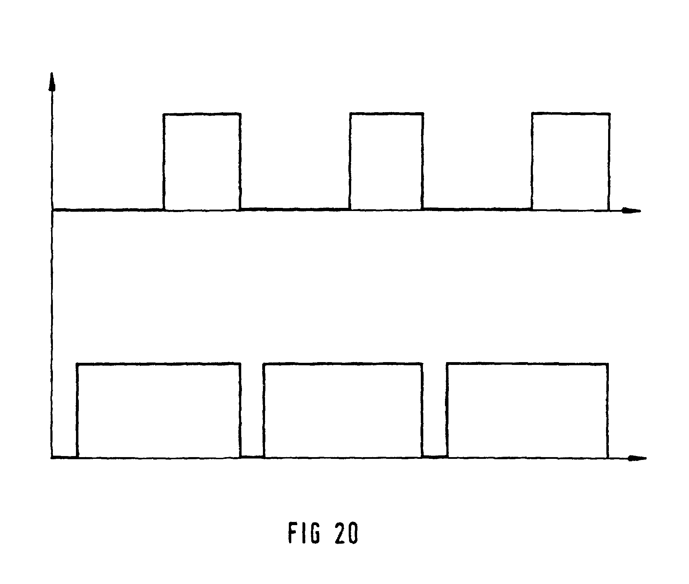

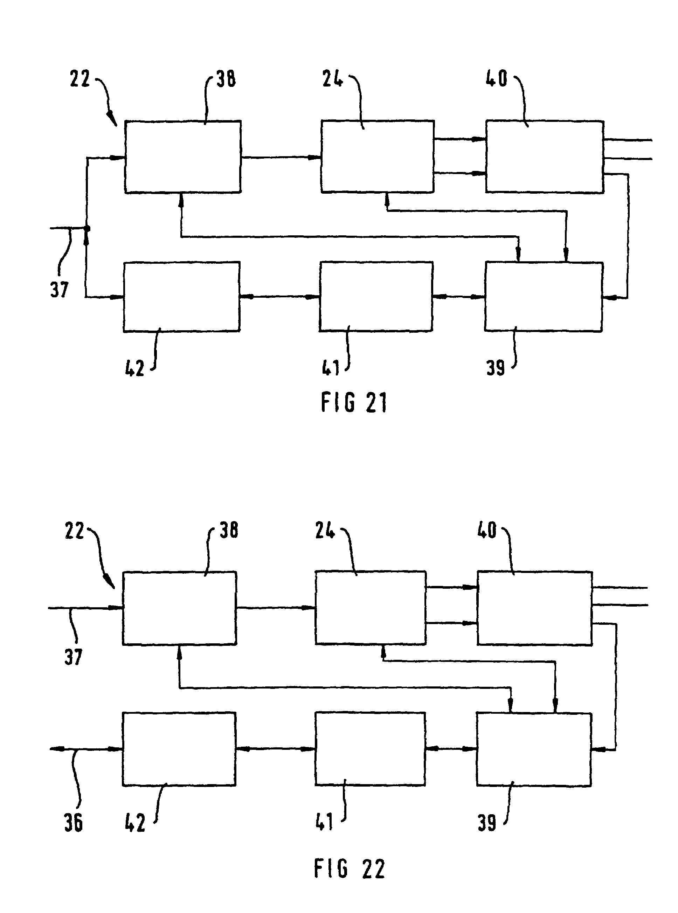

Zu der Steuereinrichtung 22, die im einzelnen in den FIG 21 und 22 dargestellt ist, gehört die bereits erwähnte Pulsweitenmodulationsvorrichtung 24. Ihre Ausgangsleistung kann variieren, wie aus FIG 20 hervorgeht, deren oberer Teil eine Ausgangsleistung der Pulsweitenmodulationsvorrichtung 24 mit niedriger Intensität und deren unterer Teil eine Ausgangsleistung der Pulsweitenmodulationsvorrichtung 24 mit hoher Intensität darstellt.

Die in den Figuren 21 und 22 dargestellten Steuereinrichtungen 22 unterscheiden sich lediglich dadurch, daß die in FIG 21 dargestellte Steuereinrichtung 22 keine separate Datenleitung 36 aufweist, sondern lediglich eine Energieversorgungsleitung 37 hat, die auch zur Datenübermittelung dient.

Zur Steuereinrichtung 22 gehört eine Leistungsadaption- und Sensoreinheit 38, die an die Pulsweitenmodulationsvorrichtung 24 und einen Controller 39 angeschlossen ist.

Die Pulsweitenmodulationsvorrichtung 24 ist ebenfalls an den Controller 39 und einen Auslaßsensor 40 angeschlossen, der ebenfalls an den Controller 39 angeschlossen ist und über den die lichtabstrahlenden Dioden 1 der Leuchteinrichtung angesteuert werden. Der Controller 39 ist über ein Modem 41 und einen Anschlußkreis 42 an die Energieversorgungsleitung 37 bzw. die Datenleitung 36 angeschlossen.

Als Controller 39 kann ein Gerät der Bauart Intel 8051 zum Einsatz kommen. Als Unterstationssteuereinrichtung 32 kann ein PC eingesetzt werden, wobei es sich um einen SICOMP-PC handeln kann.

Die Steuerung der Leuchteinrichtung beinhaltet die Regelung der Abstrahlintensität der Dioden 1, die Auswahl derjenigen Richtung bzw. derjenigen Richtungen, in die von der Leuchteinrichtung Licht abgestrahlt werden soll, die Auswahl der Farbe, in der Licht abgestrahlt werden soll, die Lichtblinkcodierung bzw. die zeitliche Aufeinanderfolge von Lichtimpulsen, einen zeitabhängig gesteuerten Ein- und/oder Aus-Betrieb, eine Überwachung der Dioden 1, eine automatische "Power on Default-start-up"-Auswahl und eine automatische "Fallback Default"-Auswahl bei Steuerungsausfall. Weitere optionale Merkmale sind möglich.

Die an der Steuereinrichtung 22 eingehende Eingangsleistung wird automatisch erfaßt und an die Anforderungen der Leuchteinrichtung angepaßt.

Für den Fall einer Standard-Konstantstrom-Serienkreis-Eingangsleistung wird die Ausgangsleistung der Pulsweitenmodulationsvorrichtung 24 so angepaßt, daß das für Wolframhalogen- bzw. Glühlampen typische exponentielle Ansprechverhalten geschaffen wird, so daß die erfin- dungsgemäße Leuchteinrichtung mit herkömmlichen Leuchteinrichtungen in ein und demselben Kreis kombiniert werden können.

Das Modem 42 codiert die modulierten Steuersignale aus der Energieversorgungsleitung 37 oder der Datenleitung 36 und ordnet die Steuersignale zu. Alternierend moduliert und codiert das Modem 41 Überwachungssignale, die von der Leuchteinrichtung kommen, um diese für ein zentrales Steuer- und Überwachungssystem verfügbar zu machen. Das Modem 41 arbeitet in zwei Richtungen, um die Steuer- und Über- wachungssignale in geeigneter Weise übertragen zu können.

Bestandteil der Steuereinrichtung 22 ist ein Überwachungsteil, mittels dem die Leuchteinrichtung auf Leitungsbruch, Erdschluß, Zuleitungsfehler und dergleichen überwacht wird.

Die Cluster 3 können z.B. auch mittels einer Selenzelle auf Funktionsfähigkeit überwacht werden.

## Patentansprüche

1. Unterflurfeuer zur Signalabgabe und zur Kennzeichnung von Verkehrsflächen, mit als Halbleiterelemente (1) ausgebildeten Lichtquellen zur direkten Abstrahlung von sichtbarem Licht und einer vor den Halbleiterelementen (1) angeordneten Abdeckplatte (7) zur Ausrichtung und Bündelung des von den Halbleiterelementen (1) abgestrahlten Lichts,
**dadurch gekennzeichnet, daß** das Unterflurfeuer als von Flugzeugen überrollbares Flughafen-Unterflurfeuer zur Befeuerung von Startbahnen, Landebahnen, Taxiways und dgl. geeignet ausgebildet ist und eine Steuereinrichtung (22) mit einer Pulsweitenmodulationsvorrichtung (24) aufweist, mittels der die den Halbleiterelementen (1) zugeführte elektrische Energie regelbar ist.

2. Unterflurfeuer nach Anspruch 1, dessen Halbleiterelemente (1) als lichtabstrahlende Dioden (LED) oder als lichtabstrahlende Polymere ausgebildet sind.

3. Unterflurfeuer nach Anspruch 1 oder 2, bei dem mehrere Halbleiterelemente (1) ein Cluster (3) bilden.

4. Unterflurfeuer nach Anspruch 3, bei dem 2 bis 200, vorzugsweise 2 bis 30, Halbleiterelemente (1) ein Cluster (3) bilden.

5. Unterflurfeuer nach Anspruch 3 oder 4, das als Clusteranordnung aus mehreren einzelnen Clustern (3) ausgebildet ist.

6. Unterflurfeuer nach Anspruch 5, bei dem 1 bis 30, vorzugsweise 1 bis 16, Cluster (3) eine Clusteranordnung (11, 12) bilden.

7. Unterflurfeuer nach einem der Ansprüche 3 bis 6, bei dem die Halbleiterelemente (1) eines Clusters (3) auf einem gemeinsamen Substrat (4) angeordnet sind.

8. Unterflurfeuer nach einem der Ansprüche 1 bis 7, dessen einzelne Halbleiterelemente (1) fassungsfrei ausgebildet sind.

9. Unterflurfeuer nach Anspruch 7 oder 8, bei dem das die Halbleiterelemente (1) halternde Substrat (4) auf seiner den Halbleiterelementen (1) zugewandten Seite mit einer Schicht (5) aus einem reflektierenden Werkstoff versehen ist.

10. Unterflurfeuer nach einem der Ansprüche 1 bis 9, bei dem ausgangsseitig der Halbleiterelemente (1) eine Spiegeloberfläche (10) angeordnet ist, mittels der die Abstrahlrichtung der Halbleiterelemente (1) abgelenkt wird.

11. Unterflurfeuer nach einem der Ansprüche 7 bis 10, dessen Strahlungsaustrittfläche (6) in ihren Abmessungen etwa der Fläche des die Halbleiterelemente (1) halternden Substrats (4) entspricht.

12. Unterflurfeuer nach einem der Ansprüche 3 bis 11, das aus gegebenenfalls unterschiedlichen Clustern (3) und/oder Clusteranordnungen (11, 12) modulartig zusammenstellbar ist.

13. Unterflurfeuer nach Anspruch 12, das bidirektional ausgebildet ist und zwei Clusteranordnungen (11, 12) aufweist, von denen jede in eine zu der der anderen entgegengesetzte Richtung Licht abstrahlt.

14. Unterflurfeuer nach Anspruch 12, das bidirektional ausgebildet ist und zwei Clusteranordnungen (11, 12) aufweist, die in zueinander geneigten Richtungen Licht abstrahlen.

15. Unterflurfeuer nach Anspruch 13 oder 14, bei dem jede Clusteranordnung (11, 12) mehrere, z.B. drei oder fünf, nebeneinander angeordnete Cluster (3) aufweist, wobei einander benachbarte Cluster (3) jeweils einen Winkel kleiner 180 Grad einschließen.

16. Unterflurfeuer nach Anspruch 12, das omnidirektional ausgebildet ist und dessen Clusteranordnungen gekrümmt ausgebildet sind und einen Kreis bzw. einen Zylindermantel bilden.

17. Unterflurfeuer nach einem der Ansprüche 1 bis 16, dessen Halbleiterelemente (1) in Reihen bzw. Spalten angeordnet sind.

18. Unterflurfeuer nach einem der Ansprüche 1 bis 16, dessen Halbleiterelemente (1) in Kreisen bzw. Zylindern angeordnet sind.

19. Unterflurfeuer nach einem der Ansprüche 1 bis 18, dessen Halbleiterelemente einen Abstrahlabschnitt (2) in Form einer asphärischen Linse aufweisen.

20. Unterflurfeuer nach einem der Ansprüche 1 bis 19, bei dem die Halbleiterelemente (1) aus einem anorganischen oder organischen Werkstoff, insbesondere aus Kunststoff, ausgebildet sind.

21. Unterflurfeuer nach einem der Ansprüche 7 bis 20, bei dem die einzelnen Cluster (3) aus einem vorzugsweise recyclebaren Kunststoff vergossen oder gespritzt ausgebildet sind.

22. Unterflurfeuer nach einem der Ansprüche 7 bis 21, bei dem die einzelnen Cluster (3) aus einem gut wärmeleitenden Werkstoff ausgebildet sind.

23. Unterflurfeuer nach einem der Ansprüche 3 bis 22, bei dem die einzelnen Cluster (3) aus einem druckfesten Kunststoff ausgebildet sind.

24. Unterflurfeuer nach einem der Ansprüche 3 bis 23, bei dem die Cluster (3) mit einem Gehäuse (15) des Unterflurfeuers eine kompakte Einheit bilden.

25. Unterflurfeuer nach einem der Ansprüche 1 bis 24, bei dem den Halbleiterelementen (1) eine Optikeinrichtung zur Strahlenbrechung und/oder Totalreflexion zugeordnet ist.

26. Unterflurfeuer nach einem der Ansprüche 1 bis 25, dessen Halbleiterelemente (1) in einem Füllkörper (8) eingebettet angeordnet sind.

27. Unterflurfeuer nach Anspruch 26, bei dem der Füllkörper (8) der Halbleiterelemente (1) an deren aktiver Oberfläche bzw. Lichtaustrittsöffnung (2) eine Aussparung (9) aufweist.

28. Unterflurfeuer nach Anspruch 26 oder 27, dessen Füllkörper (8) aus einem transparenten Werkstoff, z.B. einem transparenten Harz, insbesondere Epoxydharz, ausgebildet ist, dessen Brechungsindex vorzugsweise dem der Abdeckplatte (7) entspricht.

29. Unterflurfeuer nach einem der Ansprüche 1 bis 28, dessen Cluster (3) Bestandteile eines redundant arbeitenden Systems sind.

30. Unterflurfeuer nach einem der Ansprüche 3 bis 29, bei dem ein oder mehrere Cluster (3) des Unterflurfeuers als auswechselbare Teileinheit, insbesondere als Kassette (20), ausgebildet ist bzw. sind.

31. Unterflurfeuer nach Anspruch 30, bei dem die Kassette (20) typcodiert ist.

32. Unterflurfeuer nach Anspruch 31, bei dem an der Außenseite der Kassette (20) Vorsprünge bzw. Vertiefungen ausgebildet sind, die Vertiefungen bzw. Vorsprüngen an der die Kassette (20) aufnehmenden Halterung (21) des Unterflurfeuers zugeordnet sind.

33. Unterflurfeuer nach einem der Ansprüche 30 bis 32, bei dem der Grundkörper bzw. das Gehäuse der Kassette (20) mit einem elektrisch nichtleitenden Werkstoff, z.B. Harz oder Kunststoff, ganz oder teilweise gefüllt ist.

34. Unterflurfeuer nach Anspruch 33, bei dem dem elektrisch nichtleitenden Werkstoff ein nichtleitender Füllstoff, z.B. Glas, beigegeben ist.

35. Unterflurfeuer nach einem der Ansprüche 30 bis 34, bei dem die Wände, insbesondere eine Bodenwand des Grundkörpers bzw. des Gehäuses der Kassette (20) als Wärmeleiter, z.B. aus rostfreiem Stahl oder Aluminium, ausgebildet sind bzw. ist.

36. Unterflurfeuer nach einem der Ansprüche 30 bis 35, bei dem die Außenseite der Kassette (20), zumindest an den Hauptbeanspruchsbereichen, mit einer Härtung versehen ist.

37. Unterflurfeuer nach einem der Ansprüche 1 bis 36, dessen Grundkörper bzw. Gehäuse aus einem nichtmetallischen und elektrisch nichtleitenden Werkstoff ausgebildet ist.

38. Unterflurfeuer nach einem der Ansprüche 1 bis 37, das unterschiedliche Halbleiterelemente (1) zur Abstrahlung von Licht in unterschiedlichen Farben aufweist, wobei das abgestrahlte Licht unterschiedlicher Halbleiterelemente (1) beliebig mischbar ist.

39. Unterflurfeuer nach einem der Ansprüche 1 bis 38, dessen Steuereinrichtung (22) durch eine Energieversorgungsleitung (37) und/oder eine separate elektrische oder optische Datenleitung (36) in Signalverbindung mit einer Zentraleinheit ist.

40. Unterflurfeuer nach einem der Ansprüche 1 bis 39, mittels dem Licht in mehrere Richtungen abstrahlbar ist und mittels dessen Steuereinrichtung (22) die Abstrahlrichtung bzw. die Abstrahlrichtungen auswählbar sind.

41. Unterflurfeuer nach einem der Ansprüche 1 bis 40, mittels dessen Steuereinrichtung (22) die Abstrahlintensität und die Anzahl der Licht unterschiedlicher Farbe abstrahlenden Halbleiterelemente (1) einstellbar ist, so daß mittels des Unterflurfeuers Licht beliebiger Farbe in beliebiger Intensität abstrahlbar ist.

42. Unterflurfeuer nach einem der Ansprüche 1 bis 41, mittels dessen Steuereinrichtung (22) eine bestimmte Aufeinanderfolge von Aus- und gegebenenfalls unterschiedlichen Ein-Betriebszuständen einstellbar ist.

43. Unterflurfeuer nach einem der Ansprüche 1 bis 42, mittels dessen Steuereinrichtung (22) der Betriebszustand und die Funktionsfähigkeit der Halbleiterelemente (1) überwachbar ist.

44. Unterflurfeuer nach einem der Ansprüche 3 bis 43, bei dem ein oder mehrere Cluster (3) rotes, grünes bzw. blaues Licht abstrahlende Halbleiterelemente aufweist bzw. aufweisen, die alternierend angeordnet sind.

45. Unterflurfeuer nach einem der Ansprüche 3 bis 44, bei dem ein oder mehrere Cluster rotes bzw. grünes Licht abstrahlende Halbleiterelemente (1) aufweist bzw. aufweisen, die alternierend angeordnet sind.

46. Unterflurfeuer nach einem der Ansprüche 3 bis 45, bei dem einander benachbarte Halbleiterelementreihen eines Clusters (3) zueinander versetzt angeordnet sind.

## Claims

1. Underfloor light for signalling and identifying traffic areas, having light sources designed as semiconductor element (1) for the direct emission of visible light, and a cover plate (7), arranged in front of the semiconductor elements (1), to align and focus the light emitted by the semiconductor elements (1), **characterized in that** the underfloor light is designed to be suitable as an airport underfloor light, over which aircraft can roll, for lighting runways, taxiways and the like and has a control device (22) with a pulse-width modulation device (24), by means of which the electrical power fed to the semiconductor elements (1) can be controlled.

2. Underfloor light according to Claim 1, whose semiconductor elements (1) are designed as light-emitting diodes (LEDs) or as light-emitting polymers.

3. Underfloor light according to Claim 1 or 2, in which a plurality of semiconductor elements (1) form a cluster (3).

4. Underfloor light according to Claim 3, in which 2 to 200, preferably 2 to 30, semiconductor elements (1) form a cluster (3).

5. Underfloor light according to Claim 3 or 4, which is designed as a cluster arrangement of a plurality of individual clusters (3).

6. Underfloor light according to Claim 5, in which 1 to 30, preferably 1 to 16, clusters (3) form a cluster arrangement (11, 12).

7. Underfloor light according to one of Claims 3 to 6, in which the semiconductor elements (1) of a cluster (3) are arranged on a common substrate (4).

8. Underfloor light according to one of Claims 1 to 7, whose individual semiconductor elements (1) are designed without a mounting.

9. Underfloor light according to Claim 7 or 8, in which the substrate (4) holding the semiconductor elements (1) is provided on its side facing the semiconductor elements (1) with a layer (5) made from a reflecting material.

10. Underfloor light according to one of Claims 1 to 9, in which there is arranged on the output side of the semiconductor elements (1) a mirror surface (10) by means of which the direction of emission of the semiconductor elements (1) is deflected.

11. Underfloor light according to one of Claims 7 to 10, the dimensions of the radiation-emitting surface (6) of which correspond approximately to the area of the substrate (4) holding the semiconductor elements (1).

12. Underfloor light according to one of Claims 3 to 11, which can be assembled in a modular fashion from possibly different clusters (3) and/or cluster arrangements (11, 12).

13. Underfloor light according to Claim 12, which is of bidirectional design and has two cluster arrangements (11, 12) of which each emits light in a direction opposite to that of the other.

14. Underfloor light according to Claim 12, which is of bidirectional design and has two cluster arrangements (11, 12) which emit light in directions inclined to one another.

15. Underfloor light according to Claim 13 or 14, in which each cluster arrangement (11, 12) has a plurality of, for example three or five, clusters (3) arranged next to one another, mutually juxtaposed clusters (3) respectively enclosing an angle of less than 180 degrees.

16. Underfloor light according to Claim 12, which is of omnidirectional design and whose cluster arrangements are of curved design and form a circle or the lateral surface of a cylinder.

17. Underfloor light according to one of Claims 1 to 16, whose semiconductor elements (1) are arranged in rows or columns.

18. Underfloor light according to one of Claims 1 to 16, whose semiconductor elements (1) are arranged in circles or cylinders.

19. Underfloor light according to one of Claims 1 to 18, whose semiconductor elements have an emitting section (2) in the form of an aspherical lens.

20. Underfloor light according to one of Claims 1 to 19, in which the semiconductor elements (1) are constructed from an inorganic or organic material, in particular from plastic.

21. Underfloor light according to one of Claims 7 to 20, in which the individual clusters (3) are constructed by being cast or injected from a preferably recyclable plastic.

22. Underfloor light according to one of Claims 7 to 21, in which the individual clusters (3) are constructed from a material which is a good conductor of heat.

23. Underfloor light according to one of Claims 3 to 22, in which the individual clusters (3) are constructed from a pressure-resistant plastic.

24. Underfloor light according to one of Claims 3 to 23, in which the clusters (3) form a compact unit with a housing (15) of the underfloor light.

25. Underfloor light according to one of Claims 1 to 24, in which the semiconductor elements (1) are assigned an optical device for beam refraction and/or total reflection.

26. Underfloor light according to one of Claims 1 to 25, whose semiconductor elements (1) are arranged embedded in a filler member (8).

27. Underfloor light according to Claim 26, in which the filler member (8) of the semiconductor elements (1) has a cutout (9) on the active surface or light-emitting opening (2) of the semiconductor elements (1).

28. Underfloor light according to Claim 26 or 27, whose filler member (8) is constructed from a transparent material, for example a transparent resin, in particular epoxy resin, whose refractive index preferably corresponds to that of the cover plate (7).

29. Underfloor light according to one of Claims 1 to 28, whose clusters (3) are components of a redundantly operating system.

30. Underfloor light according to one of Claims 3 to 29, in which one or more clusters (3) of the underfloor light is or are designed as an exchangeable subunit, in particular as a cassette (20).

31. Underfloor light according to Claim 30, in which the cassette (20) is type coded.

32. Underfloor light according to Claim 31, in which there are constructed on the outside of the cassette (20) projections or depressions which are assigned to depressions or projections, respectively, on the holder (21) of the underfloor light which holds the cassette (20).

33. Underfloor light according to one of Claims 30 to 32, in which the basic body or the housing of the cassette (20) is filled entirely or partially with an electrically non-conducting material, for example resin or plastic.

34. Underfloor light according to Claim 33, in which a non-conducting filler, for example glass, is added to the electrically non-conducting material.

35. Underfloor light according to one of Claims 30 to 34, in which the walls, in particular a bottom wall of the basic body or of the housing of the cassette (20), are or is designed as a thermal conductor, for example made from stainless steel or aluminium.

36. Underfloor light according to one of Claims 30 to 35, in which the outside of the cassette (20) is provided with a hardening, at least on the main stress regions.

37. Underfloor light according to one of Claims 1 to 36, whose basic body or housing is constructed from a non-metallic and electrically non-conducting material.

38. Underfloor light according to one of Claims 1 to 37, which has different semiconductor elements (1) for emitting light in different colours, it being possible for the emitted light of different semiconductor elements (1) to be mixed arbitrarily.

39. Underfloor light according to one of Claims 1 to 38, whose control device (22) is connected for signalling purposes to a central unit by a power supply line (37) and/or a separate electric or optical data line (36).

40. Underfloor light according to one of Claims 1 to 39, by means of which light can be emitted in a plurality of directions, and by means of whose control device (22) the direction of emission or the directions of emission can be selected.

41. Underfloor light according to one of Claims 1 to 40, by means of whose control device (22) the intensity of emission and the number of the semiconductor elements (1) emitting light of different colour can be set so that the underfloor light can be used to emit light of any desired colour at any desired intensity.

42. Underfloor light according to one of Claims 1 to 41, by means of whose control device (22) it is possible to set a specific succession of OFF and, if appropriate different, ON operating states.

43. Underfloor light according to one of Claims 1 to 42, by means of whose control device (22) the operating state and the operability of the semiconductor elements (1) can be monitored.

44. Underfloor light according to one of Claims 3 to 43, in which one or more clusters (3) has or have semiconductor elements which emit red, green or blue light and are arranged alternately.

45. Underfloor light according to one of Claims 3 to 44, in which one or more clusters has or have semiconductor elements (1) which emit red or green light and are arranged alternately.

46. Underfloor light according to one of Claims 3 to 45, in which mutually juxtaposed rows of semiconductor elements of a cluster (3) are arranged offset relative to one another.

## Revendications

1. Plot lumineux encastré pour signaliser et pour identifier des zones de circulation, comprenant des sources lumineuses, formées en tant qu'éléments à semi-conducteurs (1), destinées à émettre directement de la lumière visible et une plaque de recouvrement (7) placée à l'avant des éléments à semi-conducteurs (1) et destinée à orienter et à concentrer la lumière émise par les éléments à semi-conducteurs (1),
**caractérisé en ce que** le plot lumineux encastré est formé de manière adaptée en tant que plot lumineux encastré pour aéroports sur lequel des avions peuvent rouler et qui sert à baliser des pistes de décollage, des pistes d'atterrissage, des voies de circulation et autres et présente une installation de commande (22) avec un dispositif de modulation d'impulsion en largeur (24) à l'aide duquel on peut réguler l'énergie électrique envoyée aux éléments à semi-conducteurs (1).

2. Plot lumineux encastré selon la revendication 1 dont les éléments à semi-conducteurs (1) sont formés en tant que diodes électroluminescentes (DEL) ou en tant que polymères émettant de la lumière.

3. Plot lumineux encastré selon la revendication 1 ou 2 pour lequel plusieurs éléments à semi-conducteurs (1) forment une grappe (3).

4. Plot lumineux encastré selon la revendication 3 pour lequel entre 2 à 200, de préférence entre 2 à 30, éléments à semi-conducteurs (1) forment une grappe (3).

5. Plot lumineux encastré selon la revendication 3 ou 4 qui est formé en tant qu'arrangement de grappes composé de plusieurs grappes (3) individuelles.

6. Plot lumineux encastré selon la revendication 5 pour lequel entre 1 et 30, de préférence entre 1 et 16, grappes (3) forment un arrangement de grappes (11, 12).

7. Plot lumineux encastré selon l'une des revendications 3 à 6 pour lequel les éléments à semi-conducteurs (1) d'une grappe (3) sont disposés sur un substrat (4) commun.

8. Plot lumineux encastré selon l'une des revendications 1 à 7 dont les éléments à semi-conducteurs (1) particuliers sont formés sans sertissage.

9. Plot lumineux encastré selon la revendication 7 ou 8 pour lequel le substrat (4) qui maintient les éléments à semi-conducteurs (1) est muni d'une couche (5) en un matériau réfléchissant sur son côté tourné vers les éléments à semi-conducteurs (1).

10. Plot lumineux encastré selon l'une des revendications 1 à 9 dans lequel il est placé du côté de sortie des éléments à semi-conducteurs (1), une surface à réflecteur (10) grâce à laquelle la direction d'émission des éléments à semi-conducteurs (1) est déviée.

11. Plot lumineux encastré selon l'une des revendications 7 à 10 dont la surface de sortie de rayonnement (6) pour ce qui est de ses dimensions correspond approximativement à la surface du substrat (4) qui maintient les éléments à semi-conducteurs (1).

12. Plot lumineux encastré selon l'une des revendications 3 à 11 qui peut être assemblé modulairement à partir de grappes (3) et/ou d'arrangements de grappes (11, 12) éventuellement différents.

13. Plot lumineux encastré selon la revendication 12 qui est conçu de manière bidirectionnelle et qui présente deux arrangements de grappes (11, 12) pour lesquels chacun émet de la lumière en sens opposé de l'autre.

14. Plot lumineux encastré selon la revendication 12 qui est conçu de manière bidirectionnelle et qui présente deux arrangements de grappes (11, 12) lesquels émettent de la lumière dans des directions inclinées l'une par rapport à l'autre.

15. Plot lumineux encastré selon la revendication 13 ou 14 pour lequel chaque arrangement de grappes (11, 12) présente plusieurs, par exemple trois ou cinq, grappes (3) placées l'une à côté de l'autre, des grappes (3) voisines l'une de l'autre faisant respectivement un angle inférieur à 180 degrés.

16. Plot lumineux encastré selon la revendication 12 qui est formé de façon omnidirectionnelle et dont les arrangements de grappes sont formés de façon courbe et forment un cercle ou une nappe cylindrique.

17. Plot lumineux encastré selon l'une des revendications 1 à 16 dont les éléments à semi-conducteurs (1) sont disposés en rangées ou en colonnes.

18. Plot lumineux encastré selon l'une des revendications 1 à 16 dont les éléments à semi-conducteurs (1) sont disposés dans des cercles ou dans des cylindres.

19. Plot lumineux encastré selon l'une des revendications 1 à 18 dont les éléments à semi-conducteurs présentent un segment d'émission (2) sous forme d'une lentille asphérique.

20. Plot lumineux encastré selon l'une des revendications 1 à 19 pour lequel les éléments à semi-conducteurs (1) sont formés en un matériau minéral ou organique, en particulier en matière plastique.

21. Plot lumineux encastré selon l'une des revendications 7 à 20 pour lequel les grappes (3) sont moulées par injection ou par coulée en une matière plastique de préférence recyclable.

22. Plot lumineux encastré selon l'une des revendications 7 à 21 pour lequel les grappes (3) sont formées en un matériau qui conduit bien la chaleur.

23. Plot lumineux encastré selon l'une des revendications 3 à 22 pour lequel les grappes (3) sont formées en une matière plastique résistante à la pression.

24. Plot lumineux encastré selon l'une des revendications 3 à 23 pour lequel les grappes (3) forment une unité compacte avec un boîtier (15) du plot lumineux encastré.

25. Plot lumineux encastré selon l'une des revendications 1 à 24 pour lequel un dispositif optique de réfraction et/ou de réflexion totale est associé aux éléments à semi-conducteurs (1).

26. Plot lumineux encastré selon l'une des revendications 1 à 25 dont les éléments à semi-conducteurs (1) sont enrobés dans un corps de remplissage (8).

27. Plot lumineux encastré selon la revendication 26 pour lequel le corps de remplissage (8) des éléments à semi-conducteurs (1) présente un creux (9) sur sa surface active ou sur son ouverture de sortie de lumière (2).

28. Plot lumineux encastré selon la revendication 26 ou 27 dont le corps de remplissage (8) est constitué en un matériau transparent, par exemple en une résine transparente en particulier en une résine époxy, dont l'indice de réfraction correspond de préférence à celui de la plaque de recouvrement (7).

29. Plot lumineux encastré selon l'une des revendications 1 à 28 dont les grappes (3) sont des parties constitutives d'un système à fonctionnement redondant.

30. Plot lumineux encastré selon l'une des revendications 3 à 29 pour lequel une ou plusieurs grappes (3) du plot lumineux encastré est constituée en tant qu'unité partielle remplaçable, en particulier en tant que cassette (20).

31. Plot lumineux encastré selon la revendication 30 pour lequel la cassette (20) est codée par type.

32. Plot lumineux encastré selon la revendication 31 pour lequel des saillies ou des renfoncements sont formés sur le côté extérieur de la cassette (20), les saillies ou les renfoncements sont associés au support (21) du plot lumineux encastré qui reçoit la cassette (20).

33. Plot lumineux encastré selon l'une des revendications 30 à 32 pour lequel le corps de base ou le boîtier de la cassette (20) est rempli partiellement ou complètement d'un matériau qui ne conduit pas l'électricité, par exemple de la résine ou une matière plastique.

34. Plot lumineux encastré selon la revendication 33 pour lequel on ajoute au matériau qui ne conduit pas l'électricité une charge non conductrice, par exemple du verre.

35. Plot lumineux encastré selon l'une des revendications 30 à 34 pour lequel les parois, en particulier une paroi de fond, du corps de base ou du boîtier de la cassette (20) est ou sont formée(s) en tant que conducteur de chaleur, par exemple en acier inoxydable ou en aluminium.

36. Plot lumineux encastré selon l'une des revendications 30 à 35 pour lequel le côté extérieur de la cassette (20) est muni d'un durcissement au moins aux zones fortement sollicitées.

37. Plot lumineux encastré selon l'une des revendications 1 à 36 dont le corps de base ou le boîtier est constitué en un matériau non métallique et qui ne conduit pas l'électricité.

38. Plot lumineux encastré selon l'une des revendications 1 à 37 qui présente différents éléments à semi-conducteurs (1) pour émettre de la lumière en différentes couleurs, la lumière émise de différents éléments à semi-conducteurs (1) pouvant être mélangée à volonté.

39. Plot lumineux encastré selon l'une des revendications 1 à 38 dont l'installation de commande (22) est en liaison par signaux avec une unité centrale par une ligne d'alimentation en énergie (37) et/ou par une ligne distincte de données (37) électrique ou optique.

40. Plot lumineux encastré selon l'une des revendications 1 à 39 à l'aide de laquelle la lumière peut être émise dans différentes directions et dont l'installation de commande (22) sert à pouvoir sélectionner la direction d'émission ou les directions d'émission.

41. Plot lumineux encastré selon l'une des revendications 1 à 40 dont l'installation de commande (22) sert à régler l'intensité d'émission et le nombre des éléments à semi-conducteurs (1) émettant de la lumière de différentes couleurs de telle manière qu'on puisse émettre de la lumière d'une couleur quelconque selon une intensité quelconque à l'aide du plot lumineux encastré.

42. Plot lumineux encastré selon l'une des revendications 1 à 41 dont l'installation de commande (22) sert à régler une succession déterminée d'états d'arrêt et le cas échéant de différents états de marche.

43. Plot lumineux encastré selon l'une des revendications 1 à 42 dont l'installation de commande (22) sert à pouvoir surveiller l'état de fonctionnement et l'aptitude à fonctionner des éléments à semi-conducteurs.

44. Plot lumineux encastré selon l'une des revendications 3 à 43 pour lequel une ou plusieurs grappe (3) présente(nt) des éléments à semi-conducteurs qui émettent de la lumière rouge, verte ou bleue et qui sont disposés en alternance.

45. Plot lumineux encastré selon l'une des revendications 3 à 44 pour lequel une ou plusieurs grappe présente(nt) des éléments à semi-conducteurs qui émettent de la lumière rouge ou verte et qui sont disposés en alternance.

46. Plot lumineux encastré selon l'une des revendications 3 à 45 pour lequel des rangées d'éléments à semi-conducteurs d'une grappe (3) voisines l'une de l'autre sont disposées de façon décalée l'une par rapport à l'autre.
